(19) Europäisches Patentamt / European Patent Office / Office européen des brevets

(11) **EP 4 429 070 A1**

(12) **EUROPEAN PATENT APPLICATION**

(43) Date of publication:
**11.09.2024 Bulletin 2024/37**

(51) International Patent Classification (IPC):
**H02J 13/00** (2006.01)  **H02J 3/24** (2006.01)
**G06Q 50/06** (2024.01)  **G01R 23/00** (2006.01)

(21) Application number: **23160077.6**

(22) Date of filing: **04.03.2023**

(52) Cooperative Patent Classification (CPC):
**H02J 3/241; G06Q 50/06; H02J 13/00002**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Hitachi Energy Ltd**
**8050 Zürich (CH)**

(72) Inventors:
• **Yuan, Kai**
  **85591 Vaterstetten (DE)**
• **Shchetinin, Dmitry**
  **5600 Lenzburg (CH)**
• **Larsson, Mats**
  **5102 Rupperswil (CH)**

(74) Representative: **Meier, Florian**
**meier ip**
**Buschingstraße 65 (6. OG)**
**81677 München (DE)**

(54) **METHOD AND PROCESSING SYSTEM FOR PROCESSING DATA RELATED TO A POWER GRID, AND SYSTEM COMPRISING A POWER GRID**

(57) Processing methods and processing systems (20) are provided which are operative determining a time-dependent estimate of at least one response parameter that affects or represents a frequency response characteristics of a power grid (11). The time-dependent estimate of the at least one response parameter is determined as a function of time over the time interval for a generator unit commitment and load level over the time interval.

FIG. 3

**Description**

TECHNICAL FIELD

Embodiments of the invention relate to systems and methods operative to process data related to a power grid. Embodiments of the invention relate in particular to such processing systems and methods which are operative to determine, based on operating conditions of the power grid, a response parameter related to a grid frequency response to disturbances. Embodiments of the invention also relate to systems, methods, and devices operative to mitigate grid frequency variations based on the response parameter.

BACKGROUND

Power grids are important infrastructure components. Most installed power grids are set up as alternating current (AC) grids having a grid frequency. The grid frequency may vary from one grid to another but is typically set to have a defined value for any region of deployment.

Disturbances may cause changes in grid frequency. Such changes in grid frequency can be problematic and can affect stability, efficiency, and safety of the power grid. Such disturbances may be caused by, e.g., loads, such as an arc furnace or other consumer connected to a distribution grid. Such disturbances may also be caused by events external to the power grid, such as lightning, electric discharges, etc.

After a disturbance that shifts the balance between mechanical and electric energy in the power grid, the grid frequency shows an initial excursion from its nominal value and then often recovers to its nominal value. The dynamics of this change in grid frequency as a function of time is relevant, and it is desired to reduce the change in grid frequency as much as possible. The effect of a given disturbance on grid frequency can be quantified by parameters such as the rate of change of frequency (RoCoF) or nadir of the grid frequency. The grid response to a disturbance depends on a balance between electric and mechanical power, the latter being typically stored in rotating components of, e.g., generators or, where applicable, flywheel storage systems.

US 10 218 181 B2, US 10 997 674 B2, and US 11 112 438 B2 disclose exemplary techniques that allow a grid frequency response to be examined.

There is still a need in the art for enhanced techniques of assessing grid frequency response that are useful for assessing the effect of power grid operating conditions on the response characteristics of the power grid. For illustration, systems and methods would be desirable that provide more information on how one or several response parameters that affect or indicate grid frequency response vary with varying operating conditions (such as varying power generation and/or load levels).

SUMMARY

It is an object of the invention to provide methods, devices, and/or systems that provide of assessing grid frequency response that are useful for assessing the effect of power grid operating conditions on the response characteristics of the power grid. It is an optional object to provide systems and methods that determine, at least approximately, at least one response parameter that can be used for, e.g., forecasting changes in grid frequency, back casting changes in grid frequency, and/or taking suitable actions (such as mitigating actions that reduce the variation in grid frequency) in response to expected future changes in grid frequency.

According to exemplary embodiments, methods and systems as recited in the claims are provided.

According to an aspect of the invention, there is provided a method of processing data related to a power grid. The method comprises receiving input data specifying operating conditions for at least part of the power grid over a time interval, the operating conditions comprising at least generator unit commitment and load level over the time interval. The method comprises determining a time-dependent estimate of at least one response parameter that affects or represents a frequency response characteristics of the power grid. The time-dependent estimate of the at least one response parameter is determined as a function of time over the time interval for at least the generator unit commitment and load level over the time interval.

The time-dependent estimate of the at least one response parameter may be determined based on a measurement or estimate of the at least one response parameter for at least one further time interval different from the time interval.

Various effects and advantages are attained by this method. The method is versatile and simple in that it uses operating conditions (optionally supplemented by other data) as input data for assessing the characteristics of grid frequency response. The at least one response parameter is estimated not only as a single-shot, static value, but as a time-dependent value, depending on time-dependence of generator unit commitment (i.e., power generation) and load level over the time interval.

The at least one response parameter may be determined as a timeseries over the time interval. The timeseries may comprise a timeseries of inertia values of a generator equivalent model (e.g., a single generator equivalent model) of the synchronous generators of the power grid.

When using the measurement or estimate of the at least one response parameter for at least one further time interval different from the time interval for determining the time-dependent estimate of the at least one response parameter, processing of a timeseries of operating conditions (such as a timeseries of power generation levels and a timeseries of load levels) into, e.g., a timeseries indicating the time-dependent estimate of the at least one response parameter is facilitated.

The at least one response parameter for at least one further time interval may be determined offline, prior to field operation of a processing system that performs the determination of the time-dependent estimate of the at least one response parameter. The at least one response parameter may be used to determine parameters of a processing technique (such as parameters of a regression analysis or of a trained machine learning (ML) model) prior to determination of the time-dependent estimate of the at least one response parameter. The processing technique may then be applied to the input data to receive, as output data, the time-dependent estimate of the at least one response parameter.

The method may be performed by or using a processing system. Thereby, the time-dependent estimate of the at least one response parameter can be determined automatically or see may-automatically.

The time-dependent estimate of the at least one response parameter may comprise at least an inertia of a generator equivalent model, such as an inertia of a single generator equivalent model of the power grid or a portion thereof.

Thereby, a response parameter can be determined as a function of time over the time interval which is particularly useful for determining the changes in grid frequency based on, e.g., a power swing equation.

The time-dependent estimate of the at least one response parameter may comprise a parameter that depends on the balance between mechanical and electric power in the power grid (such as an inertia of a generator equivalent model).

Thereby, a time-dependent response parameter can be determined which is particularly useful for determining the changes in grid frequency that are caused by a shift of the balance between mechanical and electric power in the power grid.

The operating conditions may comprise the load level over the time interval in a spatially resolved manner. The operating conditions may comprise a load level for each of several different areas of the power grid, with the areas being disconnectable by means of tie bars.

Thereby, improved frequency response analysis can be performed to predictively assess changes in grid frequency in a spatially resolved manner.

Alternatively or additionally, the operating conditions may comprise weather data.

Thereby, improved frequency response analysis can be performed for a power grid having renewables penetration.

Alternatively or additionally, the operating conditions may comprise timing information.

Thereby, synchronization of generator unit commitment and/or load level data with other optional data (such as weather data) is facilitated.

The time-dependent estimate of the at least one response parameter may be determined by processing the generator unit commitment and load level (and, if present, other optional input data) over the time interval using a processing technique. The processing technique may depend on a reference set of several measurements or estimates of the at least one response parameter over the at least one further time interval different from the time interval.

Thereby, information on previously determined (e.g., previously measured and/or estimated) at least one response parameter (e.g., inertia of a generator equivalent model) may be used to configure (e.g., parameterize) a processing technique. The processing technique may be set up offline, on the same processing system that uses the processing technique to determine the time-dependent estimate of the at least one response parameter, or a separate computing system different from but communicatively coupled to the processing system that uses the processing technique to determine the time-dependent estimate of the at least one response parameter.

Each of the measurements or estimates of the reference set may be associated with a respective grid condition of a set of reference grid conditions over an associated one of the at least one further time interval.

Thereby, techniques such as ML training techniques, regression analysis, etc. may be used to provide a processing technique that links timeseries of generator unit commitment and load levels to a timeseries of at least one response parameter (such as grid inertia, Rate of Change of Frequency (RoCoF), and/or frequency nadir).

The set of reference grid conditions may comprise pairs of reference grid conditions that differ from each other in one or both of generator unit commitment and load level.

Thereby, techniques such as ML training techniques, regression analysis, etc. may be used to provide a processing technique that links timeseries of generator unit commitment and load levels to a timeseries of at least one response parameter.

The reference set of measurements or estimates of the at least one response parameter is based on historic measurements, historic estimates, historic control system data, and/or simulations of at least part of a power grid.

Thereby, the processing technique performed by the processing system for field operation determination of the at least one time-dependent response parameter may be determined in a reliable and versatile manner. Data augmentation techniques may be used by combining, e.g., historic measurements and/or estimates and/or control system data with simulation data.

The reference set of measurements or estimates of the at least one response parameter may comprise historic estimates of inertia of a generator equivalent model over the at least one further time interval.

Thereby, techniques of estimating the inertia may be used that are based on, e.g., a summation of the inertia of all synchronous generators that are online at any time in the at least one further time interval and/or based on grid frequency measurements in combination with a power swing equation and generator model.

The reference set of measurements or estimates of the at least one response parameter may comprise estimates obtained based on a physical modeling, missing data replacement, and/or data augmentation.

Thereby, issues sparse datasets may be supplemented to obtain a robust processing technique that maps timeseries of generator unit commitment and load level to a timeseries of the at least one response parameter.

The physical modeling may comprise modeling kinetic energy of rotating components of synchronous generators of the power grid.

Thereby, one or several response parameters in the reference set, which are indicative of kinetic energy or the balance between kinetic and electric energy in the power grid (such as inertia), may be determined.

The reference set of measurements or estimates of the at least one response parameter may comprise historic estimates of inertia of a generator equivalent model obtained by a summation of inertia contributions of generators that were online in the one or several further time intervals.

Thereby, techniques of estimating the inertia may be used that are based on, e.g., a summation of the inertia of all synchronous generators that are online at any time in the at least one further time interval and/or based on grid frequency measurements in combination with a power swing equation and generator model.

Determining the time-dependent estimate of the at least one response parameter may comprise performing a timeseries analysis for at least the generator unit commitment and load level over the time interval to determine the time-dependent estimate of the at least one response parameter over the time interval. Alternatively or additionally, determining the time-dependent estimate of the at least one response parameter may comprise using a trained ML model having an input layer that receives the generator unit commitment and load level over the time interval, wherein the ML model has an output layer that provides the time-dependent estimate of the at least one response parameter. Alternatively or additionally, determining the time-dependent estimate of the at least one response parameter may comprise performing a regression analysis.

Thereby, information on previously measured and/or estimated response parameters (such as inertia, RoCoF, frequency nadir etc.) may be harnessed in an efficient manner in the determination of the time-dependent estimate of the at least one response parameter during field use.

The trained ML model may comprise a long short term memory (LSTM) cell, a recurrent neural network (RNN), and/or a gated recurrent unit (GRU).

Thereby, processing of a timeseries of operating conditions into a timeseries of the at least one response parameter is facilitated.

The method may further comprise determining confidence or uncertainty information of the time-dependent estimate of the at least one response parameter as a function of time over the time interval.

Thereby, the method provides not only information on the time-dependent estimate of the at least one response parameter but also its uncertainty. The uncertainty or confidence may be quantified by, e.g., ranges specified for a times within the time interval which indicate within which range the at least one response parameter is at the respective time with a certain probability (of, e.g., at least 80%, at least 90%, etc.), a standard deviation of the time-dependent estimate of the at least one response parameter taking into consideration variations in operating conditions (such as the uncertainty of the generator unit commitment and/or load levels) or other sources of uncertainty, any other value quantifying the possible variations of the time-dependent estimate of the at least one response parameter.

The method may further comprise causing an action to be performed based on the determined confidence or uncertainty information. The action may comprise an output action via a human machine interface (HMI), a power grid control action, such as an action that counteracts variations in grid frequency, or another action. The action may comprise changing generator unit commitment based on the time-dependent estimate of the at least one response parameter, so as to reduce the variation in grid frequency to be within an acceptable grid frequency range.

Determining the time-dependent estimate of the at least one response parameter may be based on domain knowledge of the power grid.

Thereby, domain knowledge (such as information on a grid topology) may be taken into consideration when determining the time-dependent estimate of the at least one response parameter.

The domain knowledge may comprise a model for at least part of the power grid.

Thereby, knowledge of electric relationships and other physical principles in the power grid (such mechanical resonances) may be taken into consideration when determining the time-dependent estimate of the at least one response parameter.

The method may further comprise repeating the step of determining the time-dependent estimate of the at least one response parameter for two or more areas of the power grid to determine the time-dependent estimate in an area-specific manner for each of the two or more areas. The two or more areas may be separated from each other by a tie bar interconnecting the areas.

Thereby, the time-dependent estimate of the at least one response parameter may be determined in an area-specific manner. This provides further enhanced accuracy when using the time-dependent estimate of the at least one response parameter for forecasting grid response (such as characteristics of grid frequency changes) in response to expected future operating conditions.

Spatially resolved load levels may be used for determining the time-dependent estimate of the at least one response parameter in an area.

Thereby, accuracy of the time-dependent estimate of the at least one response parameter is enhanced when determining the time-dependent estimate of the at least one response parameter in an area-specific manner.

The at least one response parameter may comprise a parameter of a generator equivalent model.

Thereby, forecasting grid response (such as characteristics of grid frequency changes) in response to expected future operating conditions is facilitated.

The at least one response parameter comprises a parameter of a single generator equivalent model of generators of the power grid or of part of the power grid.

Thereby, forecasting grid response (such as characteristics of grid frequency changes) in response to expected future operating conditions is facilitated using a simple model.

The at least one response parameter comprises one, several, or all of: inertia, damping, governor time constant, governor gain, load sensitivity to voltage magnitude and/or frequency.

Thereby, forecasting grid response (such as characteristics of grid frequency changes) in response to expected future operating conditions is facilitated.

The method may comprise storing the determined time-dependent estimate of the at least one response parameter in a storage accessible by a control, protection, and/or monitoring system for use in forecasting changes in grid frequency, and/or using, by the processing system, the determined time-dependent estimate of the at least one response parameter to forecast or back cast changes in grid frequency.

Thereby, the time-dependent at least one grid response parameter may be used in the method for operations (such as control operations) which forecast or back cast changes in grid frequency for a forecast or back cast time interval, based on operating conditions (such as generator unit commitment and/or load level and optional additional input data) in the forecast or back cast time interval. Forecasting grid frequency changes as a function of time (e.g., as timeseries) may be useful for, e.g., identifying and performing mitigating actions (such as changing generator unit commitment, adjusting settings of an energy management system (EMS) and/or adjusting settings of a power management system (PMS) in power grid operation)

The forecast or back cast changes in grid frequency may be determined based on the time-dependent estimate of the at least one response parameter and expected generator unit commitment and load level over a forecast or back cast time interval.

Thereby, the time-dependent at least one grid response parameter may be used in the method for operations (such as control operations) which forecast or back cast changes in grid frequency for a forecast or back cast time interval, based on operating conditions (such as generator unit commitment and/or load level and optional additional input data) in the forecast or back cast time interval.

The forecast or back cast changes in grid frequency may comprise a RoCoF and/or a frequency nadir over the forecast or back cast time interval.

The method may further comprise effecting, by the processing system, an action based on the determined time-dependent estimate of the at least one response parameter. The action may comprise an output action via a HMI and/or an action that counteracts variations in grid frequency. The action may comprise adjusting generator unit commitments and/or load levels, adjusting EMS settings and/or adjusting PMS settings.

Thereby, the method contributes to ensuring grid frequency.

The action may be selected to ensure that the grid frequency remains within an acceptable frequency range.

Thereby, the method contributes to ensuring grid frequency.

According to another aspect of the invention, there is provided a power grid control, monitoring, and/or protection method. The power grid control, monitoring, and/or protection method comprises using, by a control, monitoring, and/or protection device or system, the time-dependent estimate of the at least one response parameter determined by the method of aspect or embodiment disclosed above to determine the time-dependent estimate of the at least one response parameter, and performing an action based on the determined time-dependent estimate of the at least one response parameter.

Thereby, the method contributes to maintaining grid frequency stability.

The power grid control, monitoring, and/or protection device or method may comprise performing the method of determining the time-dependent estimate of the at least one response parameter according to any one of the aspects or embodiments disclosed herein.

According to another aspect of the invention, there is provided a processing system for processing data related to a power grid. The processing system comprises an interface operative to receive input data specifying operating conditions for at least part of the power grid over a time interval, the operating conditions comprising generator unit commitment and load level over the time interval. The processing system comprises at least one processing circuit operative to determine a time-dependent estimate of at least one response parameter that affects or represents a frequency response characteristics of the power grid, wherein the time-dependent estimate of the at least one response parameter is determined as a function of time over the time interval for at least the generator unit commitment and load level over the time interval.

The at least one processing circuit may be operative to determine the time-dependent estimate of the at least one response parameter based on a measurement or estimate of the at least one response parameter for a further time interval different from the time interval.

Various effects and advantages are attained by this processing system. The processing system is operative such that it is versatile and simple in that it uses operating conditions (optionally supplemented by other data) as input data for assessing the characteristics of grid frequency response. The at least one response parameter is estimated not only as a single-shot, static value, but as a time-dependent value, depending on time-dependence of generator unit commitment (i.e., power generation) and load level over the time interval.

The processing system may be operative to perform the method of any embodiment disclosed herein.

The various optional features of the processing system and the effects attained thereby correspond to the optional features and effects disclosed in association with the methods according to embodiments.

According to another aspect of the invention, there is provided a power grid control, monitoring, and/or protection device or system. The power grid control, monitoring, and/or protection device or system comprises at least one circuit operative to use the time-dependent estimate of the at least one response parameter determined by the method of aspect or embodiment disclosed above to determine the time-dependent estimate of the at least one response parameter, and to perform an action based on the determined time-dependent estimate of the at least one response parameter.

Thereby, the power grid control, monitoring, and/or protection device or system contributes to maintaining grid frequency stability.

The power grid control, monitoring, and/or protection device or system may be communicatively coupled to or may comprise the processing system that estimates the time-dependent estimate of the at least one response parameter.

According to another aspect of the invention, there is provided a system which comprises a power grid and the processing system of an aspect or embodiment disclosed herein, operative to determine the time-dependent estimate of the at least one response parameter.

The system may further comprise a control, monitoring, and/or protection device or system operative to perform an action based on the determined time-dependent estimate of the at least one response parameter, optionally wherein the action counteracts a change of grid frequency forecast based on the time-dependent estimate of the at least one response parameter.

The control, monitoring, and/or protection device or system may be operative to perform the action based on the time-dependent estimate of the at least one response parameter so as to maintain the change in grid frequency in response to an expected future generator unit commitment and/or load level within an acceptable frequency range.

The action performed by the control, monitoring, and/or protection device or system may be a change in generator unit commitment for one or several generator units.

According to further embodiments, there is provided machine-readable instruction code which, when executed by at least one programmable circuit, causes the at least one programmable circuit to perform the method according to an embodiment.

According to further embodiments, there is provided a non-transitory storage medium having stored thereon machine-readable instruction code which, when executed by at least one programmable circuit, causes the at least one programmable circuit to perform the method according to an embodiment.

Various effects and advantages are attained by embodiments of the invention. For illustration, the systems and methods according to embodiments provide enhanced techniques of determining timeseries of inertia and/or one or several other response parameter(s) in an efficient manner. The systems and methods are particularly useful for power grids with renewables penetration. The systems and methods allow the time-dependent estimate of the at least one response parameter to be determined using operating conditions such as load level and/or generator unit commitment as input data.

The systems and methods can be used in association with an electric power grid having renewable energy sources and/or battery-based or mechanical energy storage systems, without being limited thereto.

BRIEF DESCRIPTION OF THE DRAWINGS

Embodiments of the invention will be described with reference to the drawings in which similar or identical reference signs designate elements with similar or identical configuration and/or function.

Figure 1 is a block diagram of a processing system.
Figure 2 is a graph showing operating conditions and a grid response parameter for various time intervals.
Figure 3 is a block diagram of a system.
Figure 4 is a flow chart of a method.
Figure 5 is a diagram of a system.
Figure 6 shows a machine learning model.
Figure 7 is a block diagram illustrating processing system operation.
Figure 8 is a block diagram illustrating processing system operation.
Figure 9 is a diagram illustrating processing system operation.
Figure 10 is a flow chart of a method.
Figure 11 is a flow chart of a method.
Figure 12 is a flow chart of a method.
Figure 13 is a block diagram illustrating processing system operation.
Figure 14 is a flow chart of a method.
Figure 15 is a diagram illustrating processing system operation.
Figure 16 is a flow chart of a method.
Figure 17 is a diagram illustrating processing system operation.
Figure 18 is a flow chart of a method.
Figure 19 is a block diagram of a system comprising the processing system and a control system.

DETAILED DESCRIPTION OF EMBODIMENTS

Embodiments of the invention will be described with reference to the drawings. In the drawings, similar or identical reference signs designate elements with similar or identical configuration and/or function.

While embodiments will be described in association with processing systems and methods of estimating an inertia of a generator equivalent model as timeseries data, the embodiments are not limited thereto. The techniques disclosed herein may be used to estimate other response parameters that estimate quantitatively by how much a grid frequency changes in response to disturbances. Examples of such response parameters comprise any one or any combination of: inertia, damping, governor time constant, governor gain, load sensitivity to voltage magnitude and/or frequency, which may be determined as a timeseries over a time interval or in other form indicative of the time variation of the respective parameter estimate over the time interval. The estimate response parameter(s) may be a parameter of a power swing equation that establishes a relationship between the power grid frequency as a function of time and a change in power as a function of time, without being limited thereto.

While embodiments will be described in association with a power grid having power generating units comprising renewable energy resources, the embodiments are not limited thereto.

Processing methods and systems disclosed herein are operative to estimate at least one response parameter. As used herein, the terms "estimating" and "estimate" encompass a determination of the respective quantity that at least approximates the respective quantity.

As used herein the term "response parameter" refers to a quantity on which a change in grid frequency in at least part of a power grid in response to a disturbance is dependent. The response parameter may be dependent on a balance and/or imbalance of mechanical and electric energy in at least a part of the power grid. The response parameter may be related to a particular area of the power grid or the whole power grid. In the former case, separate response parameter(s) may be estimated for several or all of the various areas of the power grid, allowing the inertia or other response parameter(s) to be estimated in a spatially resolved manner.

As used herein, the term "response parameter" encompasses an inertia, without being limited thereto. The response parameter may comprise parameters of a power swing equation and/or governor equation or parameters derived therefrom (such as any parameter affecting a rate of change of frequency (RoCoF) or a frequency nadir).

As used herein, the term "at least one response parameter" may comprise or may be a parameter or combination of parameters that allows an effect of a further disturbance on grid frequency to be estimated in a predictive manner, based on the at least one response parameter and a magnitude (e.g., a power), frequency information (e.g., a frequency or spectrum of the further disturbance), and location of the disturbance in the power grid is known. The "at least one response parameter" may comprise or may be a parameter or combination of parameters that allows an effect of a further disturbance on grid frequency to be estimated in a predictive manner using linear response theory, wherein the linear response theory uses both the at least one response parameter and a magnitude (e.g., a power), frequency information (e.g., a frequency or spectrum of the further disturbance), and location of the disturbance in the power grid as input.

As used herein, estimation of "a time-dependent estimate of the at least one response parameter over a time interval" refers to estimating the at least one response parameter for several different times included within the time interval. The several different times for which the at least one response parameter is determined may be separated by a constant time difference, i.e., they may be regularly distributed. Alternatively, the several different times for which the at least one response parameter is determined may comprise consecutive points in time that are separated by different time intervals. I.e., the several different times may comprise irregularly spaced points in time. The at least one response parameter may, and typically is, variable throughout the time interval.

The estimation of the "time-dependent estimate of the at least one response parameter over a time interval" encompasses estimating a timeseries of the at least one response parameter, without being limited thereto.

The estimation performed by processing systems and/or method according to embodiments is based on input data. The input data may comprise one or several timeseries. The input data may comprise one or several timeseries of operating conditions. The one or several timeseries of operating conditions may comprise a timeseries indicative of power generation levels (such as a timeseries of generator unit commitment) as a function of time, and a timeseries indicative of load levels. The one or several timeseries of operating conditions may comprise several timeseries indicative of load levels for several different areas of the power grid.

As used herein, the term "power grid" encompasses a power a transmission grid and/or a power distribution grid. The power grid may comprise both a power transmission grid and a power distribution grid.

As used herein the term "inertia" refers to inertia of a generator equivalent model (such as a single generator equivalent model) of at least part of a power grid.

As used herein, the term "power" refers to electric power unless explicitly stated otherwise.

In accordance with the invention, there are provided processing methods and systems for estimating at least one response parameter that affects or represents a frequency response characteristics of the power grid, as a function of time and over a time interval. The methods and systems may optionally be operative to use the determined at least one response parameter for grid control or other control operations, in particular with an objective of ensuring that grid frequency remains within an acceptable frequency range.

The methods and systems are operative to receive input data specifying operating conditions for at least part of the power grid over the time interval. The operating conditions comprise at least generator unit commitment and load level over the time interval.

The methods and systems are operative to determine a time-dependent estimate of at least one response parameter that affects or represents a frequency response characteristics of the power grid. The time-dependent estimate of the at least one response parameter is determined as a function of time over the time interval for at least the generator unit commitment and load level over the time interval.

Thereby, time-dependent variations in grid response parameters (such as inertia of a generator equivalent model, e.g., a single generator equivalent model of multiple power generating units of the power grid) may be determined. Such a quantity is useful in forecasting future changes in grid frequency and for taking appropriate control actions to ensure that the grid frequency will remain within an acceptable frequency range. Such a time-dependent estimate of the at least one response parameter is alternatively or additionally useful in back casting the grid frequency change as a function of time in response to disturbances and for comparing it with grid frequency measurements, to thereby improve the control techniques that are provided to ensure frequency stability of the grid frequency. Such a time-dependent estimate of the at least one response parameter is alternatively or additionally useful in determining an expected change in the grid frequency as it occurs and for comparing it with grid frequency measurements in real time, to thereby improve the control techniques that are provided to ensure frequency stability of the grid frequency.

The time-dependent estimate of the at least one response parameter may be determined based on a measurement or estimate of the at least one response parameter for at least one further time interval different from the time interval. The time-dependent estimate of the at least one response parameter may be determined further based on the generator unit commitment and load level over the at least one further time interval. Thereby, a more accurate estimate of the at least one response parameter as a function of time over the time interval may be obtained.

The method and system may be operative for performing an inertia timeseries prediction (for a time interval in the past, current, and in the future future) based on previous inertia estimates and/or a physics-based model, using a timeseries analysis or a machine learning (ML) technique. Instead of or in addition to inertia, other grid response parameters may be estimated.

The previous inertia estimates do not need to be explicitly known at run-time but may be used in the form of, e.g., parameter values of a processing technique (such as parameters of a trained ML model).

The method and system may be operative such that the previous inertia estimates or other grid response parameter(s) may be obtained from a real time inertia estimator.

The method and system may be operative such that the previous inertia estimates or other grid response parameter(s) may be obtained from a database, e.g., in a Supervisory Control and Data Acquisition (SCADA) and/or energy management system (EMS).

The method and system may be operative such that missing data may be complemented with information from physical models.

The method and system may be operative such that missing data may be replaced with estimates from data augmentation and/or ML techniques. For illustration, learning from sparse data may be performed.

The method and system may be operative such that the inertia timeseries prediction can be probabilistic. For illustration, the method and system may be operative to obtain confidence intervals and uncertainty estimates of the made predictions for the at least one response parameter.

The method and system may be operative such that the inertia timeseries prediction is performed for predicting the total value of inertia in the grid or the total value of inertia in any part of the grid. The part of the grid may be anything from a big geographical area to a single bus level.

The method and system may be operative such that training data for training the model and predicting inertia using this model can include any or any combination of: statuses of generators, load profiles (such as a total load, load per area, and/or load per bus), weather conditions (such as wind, temperature, cloud coverage), and other data (such as grid topology, market clearing prices, etc.).

The systems and methods may be operative such that parameters of a single-generator equivalent of the power grid or an area in the power grid can be determined in a predictive manner. This may be done in such a manner that at least an inertia that depends on (e.g., which reflects) a total kinetic energy stored in the power grid (such as in rotating parts of the power grid) is determined as a function of time over a time interval. Alternatively or additionally, the at least one response parameter may be determined which is not directly equivalent to the kinetic energy but can be used to predict the frequency evolution in the power grid following a further disturbance of a known size and location.

The systems and methods according to embodiments provide enhanced techniques of determining response parameter(s) indicative of the kinetic energy of rotating components of the power grid. This facilitates planning (such as power generator unit commitment planning) and preventing low-inertia scenarios. Low inertia may lead to several problems. For illustration, the rate of change of frequency (RoCoF) and frequency nadir depend on the inertia. By implementing a power grid operation, based on the determined response parameter(s) such as inertia, a risk that frequency limits (e.g., $\pm 0.2\,\text{Hz}$) are violated is reduced and may even be eliminated. Violating frequency limits is undesirable as it might lead to activation of load shedding, equipment disconnection, and potentially a cascading outage. A higher inertia level prevents such problems and gives a transmission system operator (TSO) higher security margin when operating the system. The present techniques, which allow the at least one grid response parameter to be determined efficiently and predictively, thereby can be used in control and operation of a power transmission system, to provide enhanced grid frequency stability.

The systems and methods disclosed herein provide techniques of estimating at least one response parameter. The at least one grid response parameter affects the change in grid frequency on a further disturbance (such as a circuit breaker (CB) or switch trip, recurring operation of loads that intermittently have increased power demand, such as an arc furnace.

The systems and methods disclosed herein may be applied to the entire power grid or separately to each of several distinct parts of the power grid (such as parts that are connectable by tie bars or up to the single bus level).

The systems and methods are operative for the prediction of an inertia timeseries but are not limited thereto. The systems and methods implement a data-driven technique that can combine domain expertise and physics-based models to make accurate, probabilistic timeseries predictions of the inertia or other grid response parameters.

The systems and methods may combine machine learning with expert knowledge to generate an ML model capable of outputting inertia timeseries. The timeseries does not necessarily need to be a prediction into the future but can also be historic (back cast) or for the current time. If the prediction is used for the current time, the current inertia is estimated; if it is for the future, inertia is forecast; and if the inertia to be predicted is in the past, the inertia is back cast (e.g., for validation/calibration purposes).

The timeseries does not need to be discrete but can also be from sparse data. I.e., the inertia timeseries label, which is used to implement the processing technique for the input data, can be obtained from estimation. If the estimation originates from a sporadic estimation with a large step disturbance source, then the labels will be sparse (such as only once, twice, or less than ten times times per month), whereas in the case of a continuous estimation method - like active estimation using periodic, small disturbance or background load variations - the inertia label can be continuous and dense. The system and method are operative to work with both sporadic and continuous training data.

The systems and methods are operative to perform probabilistic predictions, making it possible to incorporate and/or accommodate uncertainties in the input data, the model, or other sources of uncertainties.

The model used to estimate the time-dependent estimate of the at least one response parameter over a time period can be a physics-based model, where data is used to identify parameters of the power grid model, a model-free ML model, which can employ function approximators, such as Gradient Boosting Machines or Neural Networks, or a combination of physics-based and model-free M L.

These techniques can be applied not only to inertia prediction, but for generating timeseries of other grid response parameters such as frequency, etc.

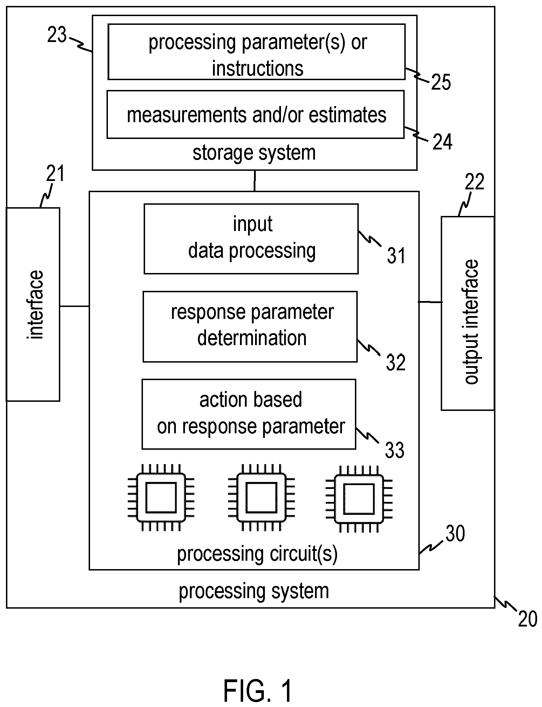

Figure 1 shows a processing system 20 operative to process input data that includes operating conditions of a power grid, which comprise at least generator levels (also referred to as generator unit commitment) and load levels over a time interval. The processing system 20 is operative to determine at least one grid response parameter (such as inertia) as a function of time, e.g., as a timeseries, over the time interval, based on the received operating conditions. The time interval may be in the future relative to processing run time, in the past relative to processing run time, or concurrently with the processing run time.

The input data comprises generator unit commitment and load levels as a function of time (e.g., in the form of timeseries data). It will be appreciated that such operating conditions may be predictive when the time interval, for which the response parameter(s) are to be determined, is in the future relative to the processing run time. Predictions for generator unit commitment are routinely available from system operation planning, e.g., for a transmission system operator (TSO) or distribution grid operator. Predictions for load levels are also routinely available based on, e.g., historic loads, optionally in combination with weather data or other data. The input data comprising generator unit commitment and load data may come from a SCADA system or other control and/or monitoring system, such as a control center of a TSO or distribution grid.

The processing system 20 may be implemented as an apparatus comprising an apparatus housing in which the components illustrated in Figure 1 are accommodated. The processing system 20 may be implemented as a combination of several apparatuses that are communicatively coupled to each other. The processing system 20 may be operative to be used in combination with, and to co-operate with, a control system for at least part of the power grid, such as a transmission control system, a regional control center, or a national control center.

As explained in more herein, the processing system 20 is operative to determine at least one grid response parameter that influences the magnitude by which the grid frequency changes in at least part of the power grid in response to a further disturbance. The grid response parameter(s) is/are determined in a manner which takes into account a time variation of the grid response parameter(s) as caused by the time-dependent changes in generator unit commitment and load level over the time interval. The at least one response parameter determined by the processing system 20 may be one or several response parameters that, possibly in combination with other parameters, allow a future change in grid frequency to be predicted when a magnitude (e.g., power), frequency and/or time information (e.g., frequency spectrum), and location of the further disturbance are known. Inertia of a single generator equivalent is an example of such a response parameter.

The processing system 20 comprises at least one interface 21 operative to receive the input data. The at least one interface may be coupled to a TSO or distribution grid control system.

The processing system 20 comprises at least one processing circuit 30. The at least one processing circuit 30 is operative to be coupled to the at least one interface 21. The at least one processing circuit 30 is configured to receive the input data, comprising information on the generator unit commitment and load level as a function of time over the time interval for which the response parameter(s) is/are to be determined. The at least one processing circuit 30 is operative to perform a processing 31 of the input data. The processing 31 may comprise a feature selection and/or feature generation from the input data or other pre-processing, such as filtering operations. The at least one processing circuit 30 is operative to perform a determination 32 of a time-dependent estimate of the at least one response parameter, based on the received input data and using information on previous estimates of the at least one response parameter (which can be inherently provided in processing parameter(s) or processing instructions 25). The at least one processing circuit 30 is operative to perform a determination 33 of at least one action that is based on the determined at least one response parameter.

The at least one processing circuit 30 may comprise any one or any combination of integrated circuits, integrated semiconductor circuits, processors, controllers, application specific integrated circuits (ASICs), field programmable gate arrays (FPGAs), circuit(s) including quantum bits (qubits) and/or quantum gates, without being limited thereto.

The processing system 20 may comprise an output interface 22. The processing system 20 may be operative to output a command that causes execution of the action determined by the action determination 33.

The processing system 20 may be operative to output a command that causes one or several of: provision of the time-dependent estimate of the at least one response parameter to a control and/or monitoring system (such as a SCADA system, a TSO control system, a distribution system control system) for ensuring grid frequency stability; controlling a human machine interface (HMI) to output information on the determined time-dependent estimate of the at least one response parameter; controlling one or several controllable devices of the power grid to mitigate future changes in grid frequency and/or to ensure that the grid frequency stays within a predefined frequency range (which may have a width of, e.g., ± 0.2 Hz, or up to 0.2 Hz, or less).

The processing system 20 comprises a storage device or system 23. The at least one processing circuit 30 may be operative to process the input data based on parameter(s) 25, executable instruction code 25, or previous response parameter measurements or estimates 24 stored in the storage system. The parameter(s) 25 may be dependent on previous response parameter measurements or estimates, causing the processing of the input data to be based on the previous response parameter measurements or estimates.

The processing system 20 may be operative to determine the previous response parameter measurements or estimates 24 and/or to generate, based thereon, the processing parameter(s) or executable instruction code 25. The processing system 20 may be operative to determine the previous response parameter(s) in various ways, such as by:

- estimating inertia as sum of the inertias of individual generator units that are online at the respective time;
- solving a power swing equation that links the time-dependent variation in grid frequency to the inertia of a generator equivalent model and the disturbance, optionally in combination with a generator equivalent model, to estimate the inertia from a measurement representing grid frequency as a function of time in response to the disturbance; parameters of the disturbance (such as disturbance power and incipient time), on generator unit commitment and/or load levels may optionally also be used in this processing;
- actively causing introduction of a disturbance into the power grid and solving a power swing equation that links the time-dependent variation in grid frequency to the inertia of a generator equivalent model and the disturbance, optionally in combination with a generator equivalent model, to estimate the inertia from a measurement representing grid frequency as a function of time in response to the disturbance; the known parameters of the disturbance (such as disturbance power and incipient time) used to introduce the disturbance, information on generator unit commitment and/or information on load levels may optionally also be used in this processing;
- using any of the more advanced techniques disclosed in applicant's application entitled "Processing method and system for processing measurements acquired in a power grid , and system".

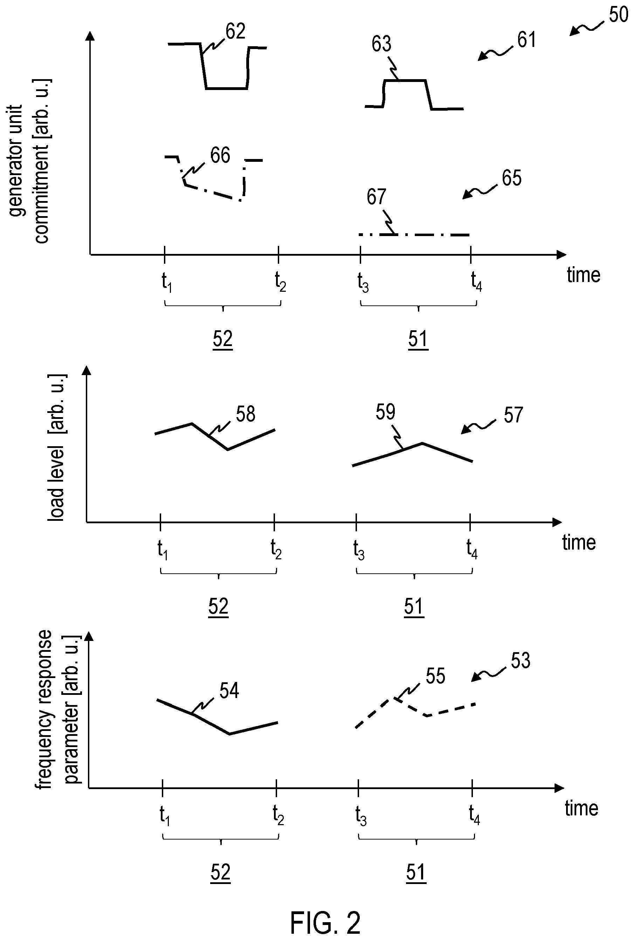

Figure 2 is a graph 50 for illustrating operation of the processing system 20 for estimating at least one grid response parameter (such as inertia of a generator equivalent model) over a time interval 51. The processing system 20 is operative such that the time-dependent at least one grid parameter 55 over the time interval 51 can be determined at a processing run time prior to the beginning of the time interval 51, i.e., in a predictive manner.

The processing system 20 processes input data comprising operating parameters to determine the time-dependent at least one grid parameter 55 over the time interval 51. The operating parameters comprise generator unit commitment 63, 67 of one or several generator units over the time interval 51 (e.g., in the form of timeseries data or other data showing the generator unit commitment at several times within the time interval 51). The generator unit commitment 63, 67 may indicate whether the respective power generator unit is online, a power generation level to which the operator has committed itself for the respective generator (optionally taking into consideration a weather forecast for renewables), and/or other information.

The operating parameters comprise a load level 59 over the time interval 51 (e.g., in the form of timeseries data or other data showing the load level at several times within the time interval 51). The load level 59 may be provided as overall load level for the power grid, or in a spatially resolved manner for various parts of the power grid for an even enhanced estimation of the at least one response parameter. For illustration, the load level 59 may comprise timeseries data showing the load level for various parts of the power grid, various buses of the power grid, etc.

The processing of the input data comprising the generator unit commitment 63, 67 and the load level 59 over the time interval 51 into the time-dependent at least one grid response parameter 55 over the time interval 51 may be performed in various ways. Physical modeling may be used. Alternatively or additionally, the processing may be based on a measurement or estimate of the time-dependent estimate of the at least one response parameter 54 over one or several further time intervals 52. The processing may also be based on the respective generator unit commitment 62, 66 and load level 58 over the one or several further time intervals 52.

In one implementation, a regression technique, such as an autoregressive exogenous (ARX) model, may be performed which is based on the estimate 54 of the at least one response parameter over the further time interval(s) 52, the generator unit commitment 63, 67 over the further time interval(s) 52, and the load level 58 over the further time interval(s) 52, with the regression technique being operative to process the input data comprising the generator unit commitment 63, 67 and the load level 59 over the time interval 51 into the time-dependent at least one grid response parameter 55 over the time interval 51.

Alternatively or additionally, techniques such as Kalman filtering may be used, with the parameters of the filter(s) being based on the estimate 54 of the at least one response parameter over the further time interval(s) 52, the generator unit commitment 63, 67 over the further time interval(s) 52, and the load level 58 over the further time interval(s) 52, and with the Kalman filter being operative to process the input data comprising the generator unit commitment 63, 67 and the load level 59 over the time interval 51 into the time-dependent at least one grid response parameter 55 over the time interval 51.

Alternatively or additionally, the at least one response parameter over several further time intervals 52, the generator unit commitment 63, 67 over the several further time intervals 52, and the load level 58 over the several further time intervals 52 may be used to train a ML model. The ML model may be operative to process timeseries data and may comprise structures such as a gated recurrent unit, GRU, or a long-short term memory (LSTM) cell to accommodate the processing of the timeseries data.

Thus, based on generator unit commitment 61, 65 for both the time interval 51 and the further time interval(s) 52, load levels 57 for both the time interval 51 and the further time interval(s) 52, and the estimate or measurement 54 of the time-dependent estimate of the at least one response parameter for the further time interval(s) 52, the processing system 20 is operative to infer the estimate 55 of the time-dependent estimate of the at least one response parameter for the time interval 51.

While Figure 2 shows the time interval 51 to be later than the further time interval 52, the time interval 51 may be prior to the further time interval 52 when performing back casting (which is useful for, e.g., verification purposes and/or calibration).

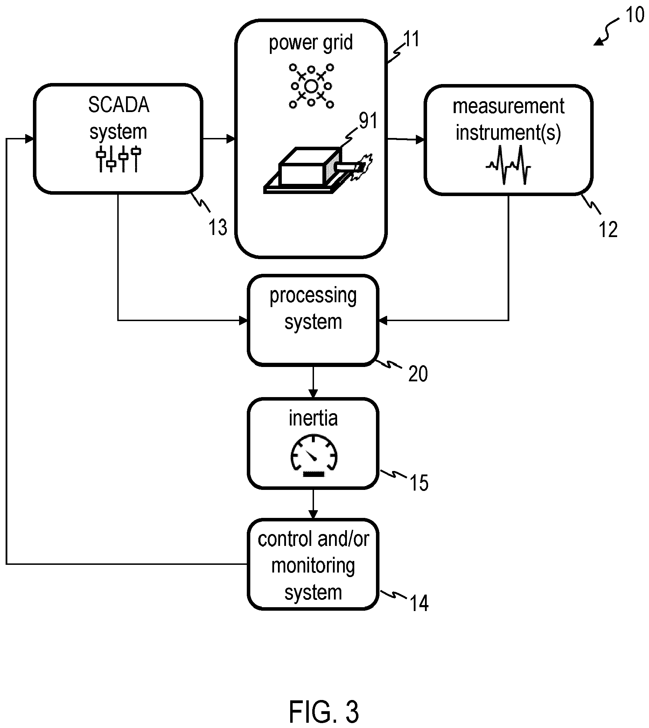

Figure 3 shows a system 10 according to an embodiment. The system 10 comprises a power grid 11. The system 20 comprises the processing system 20 operative to estimate the time-dependent estimate of the at least one response parameter (such as inertia) that affects or determines the change in grid frequency as a function of time in response to disturbances.

The system 10 comprises a SCADA system 13. The processing system 20 may be operative to receive information on the generator unit commitment and/or load level from the SCADA system 13. The processing system 20 may be operative to query the SCADA system 13 for such information for determining parameters of the processing applied to the input data (such as parameters of a ML model and/or parameters of a regression technique) and/or obtaining the input data during inference, i.e., when estimating the time-dependent estimate of the at least one response parameter for the time interval.

The system 10 comprises measurement instrumentation 12. The measurement instrumentation 12 may comprise PMUs and/or voltage measurement apparatuses, without being limited thereto. The measurement instrumentation 12 may be operative to acquire grid frequency measurements and provide the grid frequency measurements as well as power and/or voltage measurements to the processing system 20. The processing system 20 may use the grid frequency measurements in combination with disturbance data (such as a disturbance magnitude and incipient time) to determine the at least one grid response parameter (such as inertia) for the further time interval.

The processing system 20 may output the time-dependent at least one grid response parameter estimated for the time interval or a command that is dependent thereon. The processing system 20 may output an inertia 15 as a timeseries (e.g., an inertia of a single generator equivalent or an inertia of a power swing equation, respectively as a timeseries) for use by a control and/or monitoring system 14.

The control and/or monitoring system 14 may be operative to use the time-dependent estimate of the at least one response parameter (e.g., the inertia 15) to take mitigating actions that reduce a variation in grid frequency caused by a further disturbance before the further disturbance happens. The control and/or monitoring system 14 may be operative such that the mitigating action(s) may comprise adjusting power generator unit commitment and/or increasing the kinetic energy of rotating components (such as rotating components of synchronous generators) so as to keep the grid frequency within a target frequency range even when a further disturbance is introduced into the power grid. An output of the control and/or monitoring system 14 may be supplied to the SCADA system 13 for implementation of the target set points (such as planned power generator unit commitment).

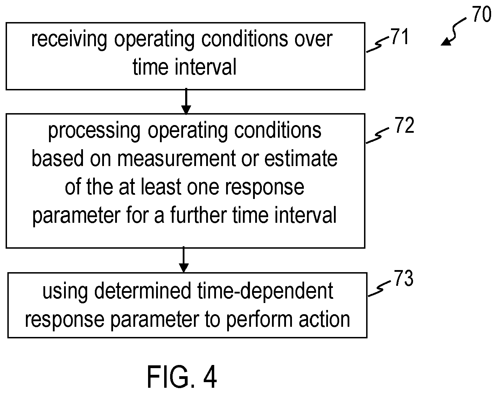

Figure 4 is a flow chart of a method 70. The method 70 may be performed automatically by the processing system 20.

At process block 71, the processing system 20 receives input data. The input data comprise operating conditions including generator unit commitment and load level as a function of time over a time interval.

At process block 72, the processing system 20 processes the input data to estimate the time-dependent estimate of the at least one response parameter (such as inertia) for the time interval. Load levels, generator unit commitment, and estimates or measurements of the at least one response parameter for one or several further time intervals may be used in the processing. For illustration, regression analysis processing, processing using a trained ML model, or other techniques may be used. The processing may also take into consideration physical models for further improved estimates of the at least one response parameter. The one or several response parameters may comprise parameters of a generator equivalent model, parameters of a power swing equation, or other parameters of the near or non-linear response theory that allow the evolution of grid frequency in response to a further disturbance to be predicted, provided that the magnitude, location and, optionally, frequency of the further disturbance are known.

At process block 73, the processing system 20 may perform an action based on the estimated time-dependent estimate of the at least one response parameter. Alternatively or additionally, the processing system 20 may provide the time-dependent estimate of the at least one response parameter to another system, such as a control center of a TSO. The time-dependent estimate of the at least one response parameter may be used by the processing system 20 or a control system communicatively coupled to the processing system 20 to perform any one or any combination of: causing outputting of an alert of warning if an evolution of grid frequency predicted based on the time-dependent estimate of the at least one response parameter indicates that the grid frequency is expected to leave an acceptable frequency range; automatically changing generator unit commitment; automatically triggering a mitigating action which ensures that the grid frequency remains in the acceptable frequency range; using the at least one response parameter for a decision logic which determines whether a mitigating action is required to ensure that the grid frequency remains within the acceptable frequency range.

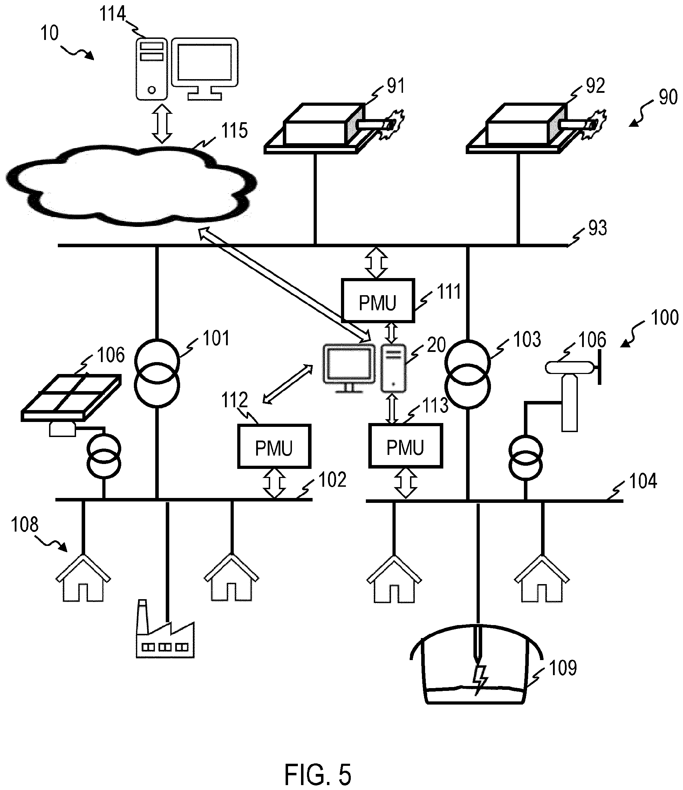

Figure 5 is a schematic view of a system 10, with power lines being shown as single line diagram. The system 10 comprises a power grid, a transmission grid 90 and one or several distribution grids 100. One or several power generation units 91, 92 may be configured to be coupled to a conductor 94 (e.g., a bus or power line) in the high voltage or extra-high voltage domain of the transmission grid 90. Rotating components of the power generation units 91, 92 may store kinetic energy, contributing to frequency stability.

The distribution grid(s) 100 is connected to the conductor 94 of the transmission grid via power stations 101, 103 operative to step down the voltage to a low voltage (such as, e.g., 90 kV). Electric power is supplied to loads 108 via distribution buses 102, 104, for example. The loads 108 may comprise industrial loads, such as an arc furnace 109 that intermittently draws an increased amount of power, or another consumer of electric power that intermittently draws an increased amount of power.

The power grid may also comprise renewable energy sources 105, 106. The techniques disclosed herein provide a robust and reliable determination of at least one grid response parameter (such as inertia) even when there is renewables penetration of the power grid.

The system 10 comprises measurement instrumentation comprising at least one PMU 111, 112, 113. The measurement instrumentation may be operative to measure power flow and/or grid frequency at the voltage bus 94 and/or the distribution buses 102, 104. This data may be used by the processing system 20 to determine the at least one grid response parameter (such as inertia) for the further time interval, which is then used for forecasting or back casting the at least one grid response parameter responsive to receipt of expected load levels and generator unit commitment for the time interval.

The system 10 comprises the processing system 20. The processing system 20 may be communicatively coupled to a control center 114 or SCADA system via a network 115 or communication links. The processing system 20 is operative to determine the time-dependent estimate of the at least one response parameter, based on expected load levels and generator unit commitment for the time interval.

Results of the processing may then be provided to and used by a control system, e.g., to change power generator unit commitment and/or otherwise mitigate future grid frequency variations (e.g., by ensuring that the grid frequency remains within a target frequency range).

Various processing techniques that allow the processing system 20 to determine the time-dependent estimate of the at least one response parameter will be described in detail below. For illustration, the processing system 20 may apply any one or any combination of: regression analysis, physics models, ML models, without being limited thereto. The determined time-dependent estimate of the at least one response parameter may subsequently be used tool automatically predict further excursions of the grid frequency in response to a future disturbance and/or take mitigating actions (such as adjusting generator unit commitment) that ensure that the grid frequency stays within a target frequency range.

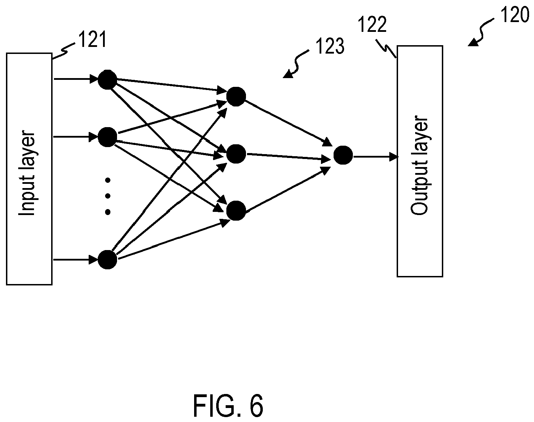

Figure 6 shows a schematic representation of an ML model that may be executed by the processing system 20 during inference, to determine the time-dependent estimate of the at least one response parameter. The ML model 120 has an input layer 121 operative to receive a timeseries (which may be regular or irregular in the time domain) of operating conditions, including generator unit commitment and load level. The ML model has an output layer 122 operative to output a timeseries (which may be regular or irregular in the time domain) of the at least one response parameter (such as inertia). The ML model has hidden layers 123 operative to process timeseries data. The hidden layers 123 may comprise GRUs or LSTM cells or other techniques suitable for processing input timeseries into an output timeseries.

During ML model training, the ML model 120 is trained using generator unit commitment, load level, and estimated or measured response parameter(s) (such as inertia) that have been obtained for further time intervals prior to performing the ML model training. During the training, the parameters of the ML model (such as bias, update, and/or reset of a GRU cell) are determined so as to optimize (minimize or maximize) an objective function which defines a distance metric between the output of the ML model and the estimated or measured response parameter(s) (such as inertia) that have been obtained for further time intervals. Techniques such as steeped gradient descent or other learning techniques may be employed to train the ML model.

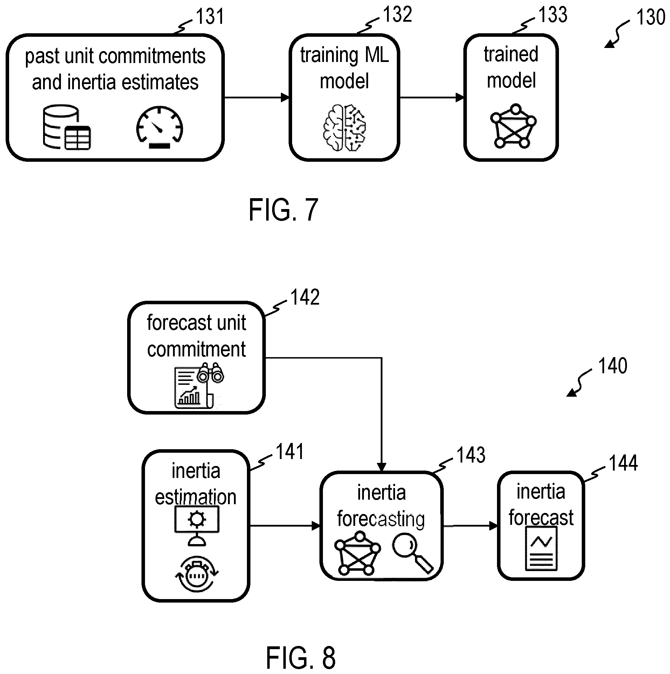

Figure 7 is a graph 130 representing training of the ML model. The training occurs prior to run time inference using the ML model. However, the ML model can be updated during in field use of the processing system 20, e.g., based on discrepancies between predicted and observed behavior.

The training is performed based on training input 131 which comprises previously used operating conditions (such as generator unit commitment and/or load levels) and previously estimated or measured response parameter(s). The operation conditions and previous response parameter(s) (such as inertia) may be timeseries data.

ML model training 132 is performed with an objective of optimizing (i.e., maximizing or minimizing) an objective function that is a metric for a difference between the ML model output timeseries and the timeseries of the previously estimated or measured response parameter(s).

The result of the training process is the trained ML model 133. The trained ML model 133 is stored in processing system storage 23 for use during the inference phase.

Figure 8 is a graph 140 representing use of the ML model during inference, in particular for forecasting or back casting the time-dependent estimate of the at least one response parameter. Inertia forecasting 143 uses the trained ML model 133. The trained ML model receives the forecast unit commitment, i.e., the generator unit commitment expected for the time interval in the future, as input. The trained ML model may receive the forecast load level as input. The trained ML model processes the input, which may be timeseries, to generate a ML model output indicative of the time-dependent estimate of the at least one response parameter in the time interval. This inertia forecast 144 (or other response parameter forecast 144) may be used for planning, monitoring, and/or controlling grid operation.

For illustration, generator unit commitment may be adjusted pro-actively and prior to the time interval, to maintain a desired balance of mechanical and electric energy in the power grid.

The processing system 20 may be operative such that the inference process 140 is run several times for various different forecast generator unit commitments 142. Thereby, setpoints may be identified which result in a forecast grid response parameter that is within a target range. The identified setpoints may then be implemented in grid operation.

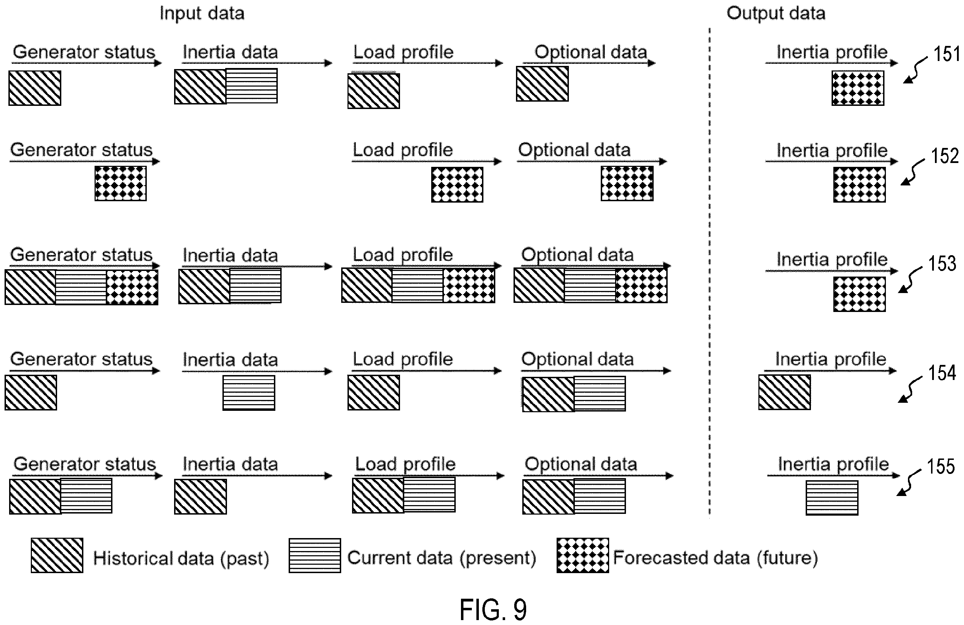

Figure 9 illustrates various scenarios for which the processing systems and methods according to the invention are useful. Different times are indicated by different shading of the blocks representing data. Inertia data is provided merely as an example for response parameter data. The optional data may comprise weather data or other data that can affect power generation and/or consumption.

In forecast scenario 151, past power generation, inertia, and load profile data is used to determine parameters of a processing technique that allows a future inertia profile to be estimated for a time interval in the future. The future inertia profile may be based not only on past inertia data, but also on current inertia data.

In forecast scenario 152, future (expected) power generation and load profile data may be used to estimate a future inertia profile for a time interval in the future.

In forecast scenario 153, parameters of the processing (such as ML model parameters or parameters of a regression analysis technique) are determined based on power generation, inertia, and load profile data for both past time interval(s) and a current time interval. This data, in combination with future (expected) power generation and load profile data, allows the future inertia profile to be estimated for a time interval in the future.

In back cast scenario 154, an inertia profile in a previous time interval is back cast using power generation and load profile data for the previous time interval.

In scenario 155, an inertia profile for the current time interval is determined computationally using the load profile and generation profile for the current time interval as input. Inertia, load profile, and generation profile for a past time interval may be used to generate the processing model that outputs the inertia profile for the current time interval.

Scenarios 154 and 155 are useful for, e.g., model verification and/or calibration purposes. For illustration, the regression analysis or ML model may be modified during field operation of the processing system 20 for inference, based on a comparison of a response parameter profile expected based on the regression analysis or ML model and the response parameter profile determined based on measurements (e.g., by monitoring the change in grid frequency in response to a disturbance and calculating the response parameter based thereon).

Any type of model that performs a mapping $f: R^{N \times T1} \to R^{M \times T2}$ can be used for processing N > 1 features of the input timeseries into M ≥ 1 features of the output timeseries. The mapping may be obtained using regression techniques, a trained ML model, and/or physics modelling. The mapping maps an input $x \in R^{N \times T1}$ - with number of features $N$ and timeseries length $T_1$ of every feature - to output $y \in R^{M \times T1}$ - with number of outputs $M$ and timeseries length $T_2$ of every output. The timeseries length of every feature and output does not need to be the same, i.e., $T_1 = [T_{1,1}, ..., T_{1,N}]$ with timeseries length $T_{1,N}$ of feature N and $T_2 = [T_{2,1}, ..., T_{2,M}]$ with timeseries length $T_{2,M}$ of output M, but was assumed here for a simplified notation. Various methods for timeseries such as Autoregressive Models (e.g., ARIMA) and/or Neural Networks (e.g., Recurrent Neural Networks, Transformers) may be used in the techniques disclosed herein.

When using a ML model, the dimensions of input and output vary depending on the ML model used. For example, methods like Linear Regression require the input dimension to be the same, i.e., the length of the timeseries being the same. However, other ML models allow different types of features as input, e.g., categorical, continuous timeseries of different length, binary, sparse data, etc.

A list of possible ML models to perform timeseries prediction includes Decision Tree-based models (Decision Tree, Random Forest), Gradient Boosting Machines (XGBoost, LightGBM, etc.), Linear Regression-based methods (General Linear Models, kernel-base methods, Autoregressive Models like SARIMAX, ARIMA etc.), Support Vector Machines, Mixture Models (e.g., Gaussian Mixture Models), Neural Networks (e.g., Recurrent Neural Networks, Long Short Term Memory), without being limited thereto.

The ML model can vary depending on the data type, amount of data, and particular grid.

The training is conducted as a supervised learning. The training may comprise an optional pre-training. The pre-training can be selected from known techniques, e.g., self-supervised, semi-supervised, or unsupervised. The training labels are timeseries of generation unit commitment, load level, or features derived therefrom. The training labels may optionally comprise other data, such as a timeseries of weather data, with the features being generated based on generation unit commitment, load level, and the optional data.

In the processing systems and methods, physics knowledge of the system comprising the power grid can be embedded in various ways, including any one or any combination of:

- using Physics Informed ML and making the ML model (such as a neural network) learn the physics constraints of the system,
- using features as input to the processing that are generated and/or selected based on physics knowledge to attain good prediction performance;
- performing data augmentation for determining the parameters of the processing that is performed during field operation runtime, e.g., by using data augmentation to generate a more extensive data set for a regression analysis or ML model training;
- using physics models to perform the prediction (e.g., by modelling the inertia timeseries based on the generator unit commitment timeseries, such as by summing the inertias of the generator units that are online at any given time in the time interval);
- residual learning.

Explicit physics knowledge of the grid including the dynamics and physics constraints can be incorporated into the loss function of the ML model, which is used to train the model. Embedding physics knowledge can lead to faster training times and, thus, more efficient training as the search space is biased towards physically feasible subspace. Alternatively or additionally, embedding physics knowledge can lead to higher performance (lower loss) as physically feasible solutions are obtained that are closer to a global optimum, which has to be a physically reasonable solution (in contrast to any local optimum, which may not be physically feasible and thus can yield bad results). Alternatively or additionally, embedding physics knowledge can lead to feasibility of the solution by respecting the physics constraints. Alternatively or additionally, embedding physics knowledge can lead to higher robustness as every solution lies on the manifold of the physically feasible space.

The physics equations - usually formulated as Differential Equation (DE) either Ordinary, Partial, or Stochastic - may be incorporated into the ML learning process. The dynamics and physics constraints can be reformulated as in M. Raissi et al., "Physics-informed neural networks: A deep learning framework for solving forward and inverse problems involving nonlinear partial differential equations. Journal of Computational physics". 2019. Vol. 378, pp.686-707. Further instantiations are possible, e.g., Fourier Neural Operators as disclosed in Z. Li et al. "Fourier neural operator for parametric partial differential equations." arXiv preprint arXiv:2010.08895. The physics-informed part can learn the solution of the differential equation to perform prediction. Alternatively or additionally, the physics-informed part can be used as a loss function to shape the loss landscape of the ML model.

Alternatively or additionally to using physics knowledge during ML model training, domain expertise can be used to select relevant features and combine them in a physically meaningful way. Domain expertise is then used to formulate heuristics to pre- and post-process the features making it easier for the ML model or regression analysis to interpret feature. Example heuristics can be how certain features, e.g., particular week day (Sunday vs Monday) influence the power grid (i.e., heavy machineries are off on Sundays causing lower load-side inertia than on Mondays when machineries are turned on and thus provide load-side inertia), bounds on certain features (e.g., only 20% of total inertia is load-side inertia), or how certain events (extreme weather conditions, price spikes on energy markets, etc.) influence both the features and the output. Another heuristic using domain expertise is the weighting of certain features and tuning the loss function weights.

The solution of the physics models or grid model can be obtained either by analytical or numerical solutions (i.e., a simulation). For the numerical solutions a variety of approaches exist, such as numerical optimization and using Neural Networks that learn the solution, as in M. Raissi et al., "Physics-informed neural networks: A deep learning framework for solving forward and inverse problems involving nonlinear partial differential equations. Journal of Computational physics". 2019. Vol. 378, pp.686-707 or Z. Li et al. "Fourier neural operator for parametric partial differential equations." arXiv preprint arXiv:2010.08895.

An example for a physics model includes the swing equation, which relates the generator inertia and damping with the imbalance between the electrical energy demand in the power grid and mechanical energy coming from the prime mover:

$$2H\Delta\dot{\omega} = \Delta P_m - \Delta P_e - D\Delta\omega - P_{dist} \qquad (1)$$

where $H$ is the inertia, $D$ is damping, $\Delta$ denotes the deviation of a quantity from the pre-disturbance value, $P_m$ is the mechanical power applied to the rotating component (e.g., turbine), $P_e$ is the total electrical demand, $P_{dist}$ is the disturbance occurring in the power grid (such as a load step change, trip of a generator or an interconnector line), $\omega$ and $\dot{\omega}$ are the frequency and its derivative, respectively.

For periodic disturbances, the mechanical power deviation $\Delta P_m$ is assumed to be zero as the turbine governor will not react to them due to a high frequency of the disturbance, short measurement window, or governor dead bands. For large disturbances, $\Delta P_m$ can be estimated by posing a first-order governor equation:

$$T\Delta P_m = -\Delta\dot{P}_m - K\Delta\omega \qquad (2)$$

where $T$ and $K$ are the governor's time constant and gain, respectively.

The electrical power deviation $\Delta P_e$ consists of several additive terms:

$$\Delta P_e = \Delta P_{load} + \Delta P_{losses} + \Delta P_{tie\ lines}, \qquad (3)$$

wherein:

- $\Delta P_{load}$ is a total change of the active power consumed by the load(s) as a result of the disturbance. The active power may depend on both the frequency and magnitude of the voltage at their bus, both of which can change as a result of the disturbance.
- $\Delta P_{losses}$ is the total change of the active power losses (e.g., in transmission lines and transformers) as a result of the disturbance. Large disturbances may cause the redistribution of the power flows due to the primary frequency control of generators, thus changing the losses.
- $\Delta P_{tie\ lines}$ is the total change of the active power flows in the tie lines as a result of the disturbance. This term may be omitted. In particular, this term may be taken into account selectively when determining a response parameter (such as inertia) for an area of the power grid and not entire grid. When determining the at least one response parameter (such as inertia) for an area, including this term helps isolate the area from the rest of the power grid and provides a more accurate estimate of the at least one response parameter for the respective area.

In equations (1), (2, and 3) above, quantities $H, D, K,$ and $T$ are scalars that represent the parameters of an equivalent generator, while all other quantities are timeseries. The processing system 20 may be operative to determine one, some, or all of the parameters $H, D, K,$ and $T,$ using measurements included in the data. The processing system 20 may be operative to determine at least the parameter H, based on the measurements included in the data. The measurements included in the data may comprise measurements that define or allow the processing system 20 to at least approximately determine the time-dependent change in $\Delta P_{load}$ and $\Delta P_{losses}$ in response to the disturbance. The measurement data used by the processing system may comprise at least the time-dependent grid frequency (e.g., in the form of timeseries data) in response to the disturbance.

The equations (1)-(3) above serve as an example and the invention is not limited to using these exact equations. Parameters of other parametric equations modeling the behavior of the grid frequency in response to the disturbance may be determined by the processing system, as an alternative or in addition to the parameter of the above-described model.

Using the swing equation, the processing system and method can simulate the response of the grid. A time-dependent estimate of the at least one response parameter (such as inertia, grid frequency nadir, RoCoF) can be obtained for any assumed load level and/or generator unit commitment profile.

More advanced techniques can be used, such as those described in applicant's application entitled "Processing method and system for processing measurements acquired in a power grid , and system".

The predictions from the physics models can then be either fed into another model, or directly used as prediction of the inertia.

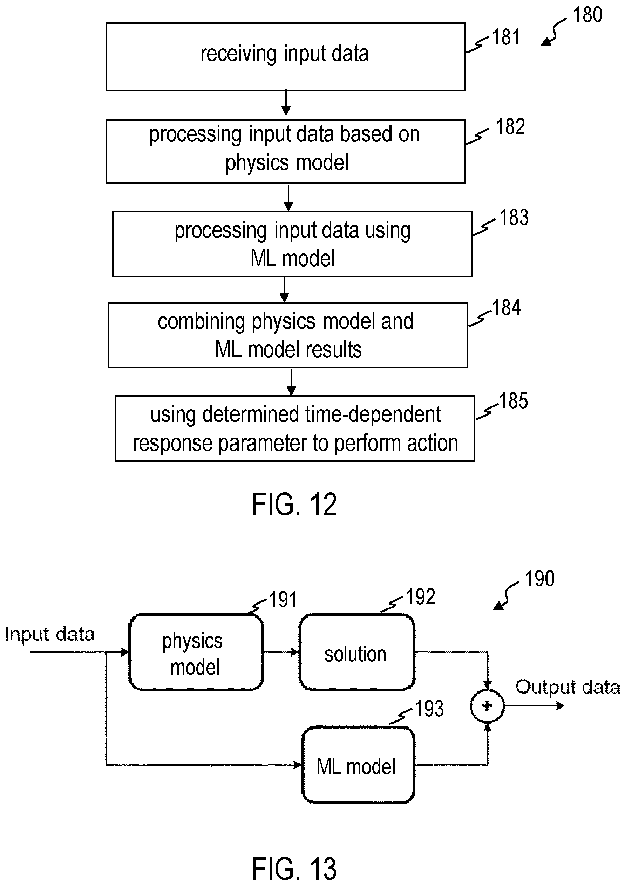

The physics model can be combined with ML or regression analysis based techniques, as will be described in more detail with reference to Figures 12 and 13 below.

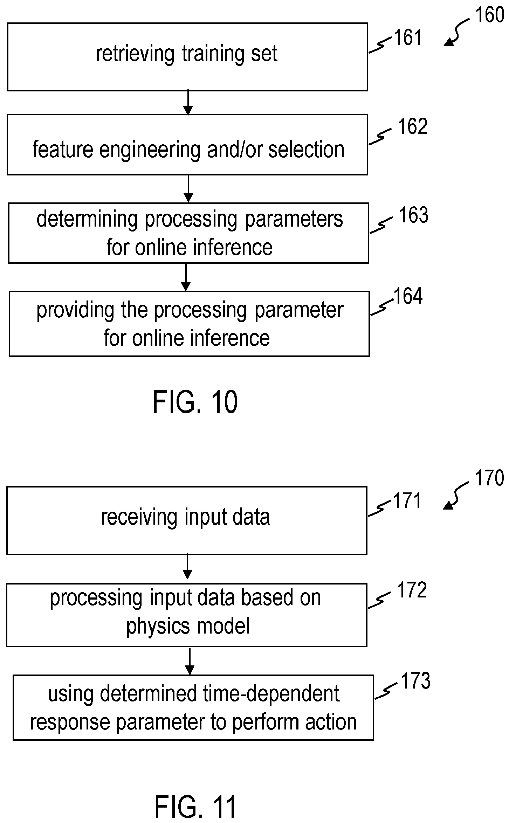

Figure 10 is a flow chart of a method 160. The method 160 may be performed automatically by the processing system 20 or by a dedicated computing system separate from the processing system 20.

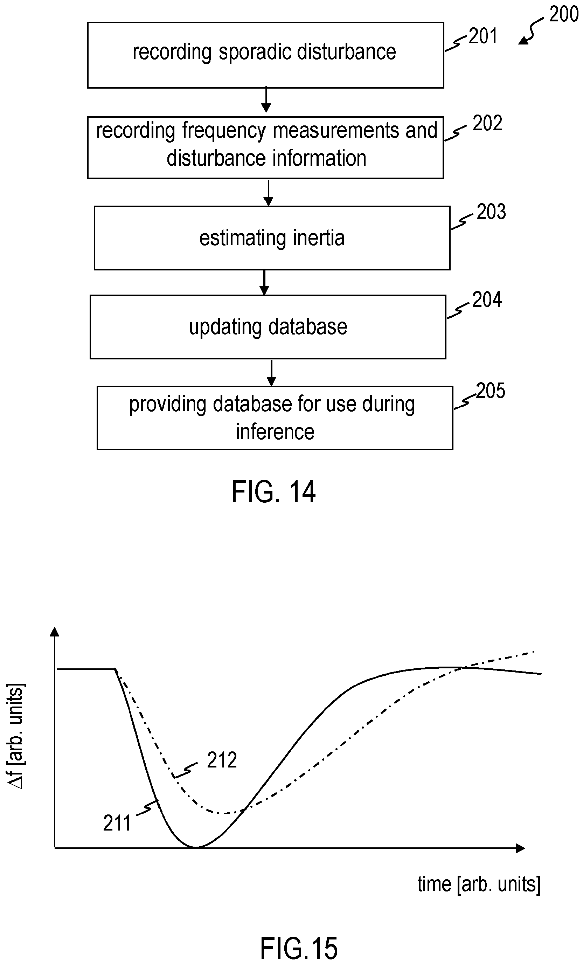

At process block 161, a training set is retrieved. The training set comprises time-dependent generator unit commitments, load levels, and corresponding response parameter(s) that define the grid frequency response to disturbances. The load levels may be spatially resolved load levels for various sections of the power grid. These data may respectively timeseries data, but may also be sporadic data, as explained in more detail with reference to Figure 14. The training set may comprise other data, such as weather data or data that otherwise affects power generation and/or demand.

At process block 162, feature engineering and/or selection is performed. The generator unit commitments, load levels, and optional other data may be combined, optionally using physics knowledge, to generate a timeseries of input features. Alternatively, the timeseries of generator unit commitment and load levels may be used for inputting into the processing scheme that is trained. A selection may be made, e.g., by performing filtering and/or removing outliers (such as frequency changes which are excessive in size as caused by exceptional one-time events).

At process block 163, the parameters of a processing technique are determined. The parameters may comprise parameters of an ML model or of a regression technique. Supervised training may be performed to determine the parameters of the processing technique in the training phase.

At process block 164, the parameters of the processing technique and/or executable instruction code that utilizes these parameters is provided to the processing system 20 for storing and subsequent use for inference at run time of the processing system 20.

During run time, the generator unit commitments and/or load levels and optional additional data is used as input for determining the estimate of the at least one response parameter for a time interval, e.g., for forecasting the at least one response parameter for a time interval in the future.

Alternatively or additionally to using a processing technique that requires training for learning adjustable parameter values of the processing technique, the processing may be based on physical modelling.

Figure 11 is a flow chart of a method 170. The method 170 may be performed automatically by the processing system 20.

At process block 171, the processing system 20 receives input data. The input data comprise generator unit commitment and load levels for a time interval.

At process block 172, the processing system 20 processes the input data to determine the time-dependent estimate of the at least one response parameter in the time interval, based at least on physics knowledge. The physics knowledge may comprise the power swing equation according to Equation (1) or Equations (1)-(3), or equivalent formulations.

At process block 173, the processing system 20 uses the time-dependent response parameter to perform a control, monitoring, planning, or other operation. The control or planning operation may comprise an operation that ensures the grid frequency to remain within an acceptable range, such as changing generator unit commitment.

Additional details on how physics modelling can be used to determine the at least one response parameter have been described in greater detail above. Reference is made to these explanations to avoid a duplication of the respective explanations.

The processing of the input data, such as generator unit commitment and load levels timeseries, (i) based on a processing technique that requires training and (ii) based on a processing technique that employs a physics model may be combined. This may be done using residual learning, for example, during training, or also by combining the results during inference for enhanced performance (e.g., by performing a consistency check of the output of the trained model based on a physics-based model).

Residual learning describes the process, where the residual between true value and predicted value is learned by a ML model, i.e., prediction (as close to true value as possible) = residual prediction (from ML) + physics model prediction. Learning the residual is used when there is uncertainty and thus an error between model and reality.

The residual learning process may be applied wherever a physics model exists, either predicting global behavior or local behavior.

An example for inertia forecasting may comprise using the sum of generators as physics model (the solution would be the sum of generator inertia) to predict the inertia. Generator unit commitment provides the list of online generators in the future. The trained model (ML model or regression technique) additionally predicts the true difference between actual inertia and inertia provided by the generators, i.e., the trained model predicts the load inertia and accounts for additional uncertainties.

Similar to the application of physics models, the predictions of the residual learning model can be used in another model or directly predict the at least one response parameter. An example here is that a first ML model (e.g., neural network) may be trained that requires the frequency of the grid as input, e.g., in an inertia prediction task that estimates the current inertia. To this end, one could either directly feed in the measured frequency, or feed in a processed frequency that is the output of a second ML model (e.g., neural network). The second ML model (e.g., neural network) outputs frequency as the sum of the solution of a physics model (solution to swing equations) and the output of a ML model that learns the residual between the swing equation solution and the real, measured frequency. Having a second ML model (e.g., neural network) processing the frequency instead of directly feeding the frequency in may allow the first ML model (e.g., neural network) to process additional information and correlations between the grid frequency and the inertia and also incorporate phenomena such as local frequencies or remove the effects of the frequencies, by allowing the information of the loss backpropagate through both ML models (e.g., neural networks).

Figure 12 is a flow chart of a method 180. The method 180 may be performed automatically by the processing system 20.

At process block 181, the processing system 20 receives input data. The input data comprise generator unit commitment and load levels. The input data may comprise labeled training data, such as training sets of generator unit commitment timeseries data, load level timeseries data, and corresponding response parameter (e.g., inertia) timeseries data.

At process block 182, the processing system 20 processes the input data to determine the time-dependent estimate of the at least one response parameter in the time interval, based at least on physics knowledge. The physics knowledge may comprise estimating the inertia of a single generator equivalent model as a timeseries, based on the generator unit commitment of the various generator units.

At process block 183, the processing system 20 processes the input data using a ML model. The processing at process block 183 may comprise a training using the labeled input data.

At process block 184, the processing system 20 combines the results of process blocks 182 and 183. This may comprise computing a residual.

At process block 185, the processing system 20 uses the time-dependent response parameter to perform a control, monitoring, planning, or other operation. The control or planning operation may comprise an operation that ensures the grid frequency to remain within an acceptable range, such as changing generator unit commitment.

Figure 13 shows a block diagram 190 representing processing by a processing system 20 that combines a physics model 191 and a ML model 193. The input data is processed by both the physics 191 and the ML model 193. The output timeseries 192 of the physics model (which is the solution of one or several differential equations, which may describe the frequency response dynamics, such as the power swing equation) may be combined with the output timeseries of the ML model 193 to determine the residual. The residual may be used for refinement of the processing, for consistency checks, and/or for uncertainty estimation. The uncertainty estimation may be used for determining whether control or planning actions are to be performed automatically.

As grid response parameters may be monitored only in an intermittent (as opposed to continual, regularly recurring) manner during power grid operation, the processing systems and methods disclosed herein may be specifically adapted such that they can perform the desired operation also when sporadic data is available for, e.g., training. As used herein, the term sporadic data refers to data available for discrete, non-regularly recurring times.

In case of sparse labels available, several methods can be used, which may comprise any one or any combination of:

- data augmentation;
- interpolation from a database for similar events;
- meta-learning;
- self/semi-supervised learning.

The label (inertia) is sporadically available when the data originates from an inertia estimation method that relies on sporadic events, such as generator or interconnector line trips, which are easily identifiable from the SCADA data. However, the use of the following techniques is not only limited to this case, but also when not enough data is available (e.g., when the algorithm is just installed and not enough real world data is collected or when many data points had to be removed due to bad quality, etc.).

*Data augmentation*

Data augmentation is a technique that may be used in ML to overcome the lack of data. It describes the process of enriching the collected (sparse) data. Exemplary techniques that may be used are disclosed in D. Cao et al. "Spectral temporal graph neural network for multivariate timeseries forecasting. Advances in Neural Information Processing Systems". 2020. vol. 33, pp. 17766-17778. Example techniques include using grid information and simulations or using physics models to obtain additional, synthetic data. To fill in for sparse, real data, synthetic data can be used.

The synthetic data may be used in various ways. The synthetic data may be used to pre-train the model (by itself or in addition to real data) and fine-tune in a second step (using either just real data or in combination with synthetic data). Alternatively or additionally, a technique may be implemented which comprises directly training on any combination of synthetic and real data (only synthetic, synthetic and real, only real data).

The ML model training method can sample in a weighted way from both real and synthetic data, e.g., using real data twice as often as synthetic data, or first training purely on synthetic data and then fine-tuning on real data (see Meta-Learning and Self/Semi-supervised learning paragraphs in the following).

*Interpolation, extrapolation or lookup techniques*

Interpolation between similar events may comprise building a database of features and their corresponding labels (inertia and/or another grid response parameter), and continually predicting the grid response parameter(s) timeseries by an interpolation/extrapolation/lookup method.

A use case comprises the following technique, which is also shown in the method 200 of Figure 14: whenever a sporadic disturbance event happens (process block 201), the inertia or another grid response parameter can be estimated (process block 203). Estimating the inertia may comprise solving the power swing equation, using grid frequency measurements (obtained at process block 202). Estimating the inertia may also be based on solving

$$2H_{eq}\frac{d\Delta\omega_{eq}}{dt} = -\Delta P_e, \qquad (4)$$

where $H_{eq}$ is the equivalent system inertia, $\Delta\omega_{eq}$ is the change in grid frequency with its derivative defined as RoCoF,

$$\Delta P_e = \Delta P_L + \Delta P_{dist}, \qquad (5)$$

$\Delta P_L$ represents the power variations of frequency-dependent and voltage-dependent loads, and $\Delta P_{dist}$ is the size of the disturbance.

The information (state) at the time of disturbance is then recorded (process block 204). The recorded information may comprise generator unit commitment, load level, optional weather and/or time of day, etc., and the corresponding response parameter(s) (such as inertia). The method then can be a big database of sporadic events, and can infer (lookup, interpolate, or extrapolate) for a similar operating point, what the response parameter(s) is or are, thus giving estimates if the current state is used and then looked up in the database (lookup also refers to inferring the model using the current state as input to the model). Alternatively or additionally, the method can be based on a model that is used to correlate the grid response parameter(s) with the input features (load schedule, weather, time of day, etc.) and thus predict what the inertia is based on a given value for the features.

The processing system and processing method itself can be operative to use any combination of interpolation, extrapolation, or lookup through heuristic, pre-defined functions, model, or ML models for estimating the at least one grid response parameter in a time-dependent manner during inference (process block 205), as similar events across similar grids will lead to similar inertia values.

Example techniques and models that accomplish this comprise, e.g., k-nearest neighbor search, using ML to train a model that maps from feature to target, without being limited thereto. To overcome the sparsity issue, the dataset can be augmented with synthetic data or real data from other grids. The features need to reflect the origin of the data, i.e., by describing the grid from which the inertia originates in an expressive way (e.g., by means of a grid model).

An initial ML model describing the general relationship between features and target may be learned in the first step to learn a rough output of the prediction target. The data used to train the initial ML model can be a combination of synthetic and real data. In a second step, fine-tuning of the initial model is performed. Real, sparse data is used in the second step improving the prediction accuracy.

To this end, techniques from Meta-learning (such as few shot learning, see, e.g., Y. Wang et al. "Generalizing from a few examples: A survey on few-shot learning. ACM computing surveys (csur)". 2020. Vol. 53(3), pp.1-34), and Transfer Learning (as disclosed, e.g., in K. Weiss et al. "A survey of transfer learning." Journal of Big data. 2020. Vol. 3(1), pp.1-40) can be applied.

The result of the processing performed in the processing system 20 and/or by the processing method is a timeseries of at least one grid response parameter. The grid response parameter may be any parameter or combination of parameters that affect, and optionally that determine, how a grid frequency evolves as a function of time in response to a disturbance.

Figure 15 illustrates grid frequency variations 211, 212 in response to a disturbance, as a function of time. The grid response is generally dependent on generator unit commitment and/or load level. For illustration, a first grid frequency evolution 211 may be caused by a disturbance for a first generator unit commitment and/or first load level. A different second grid frequency evolution 212 may be caused by the same disturbance for a different second generator unit commitment and/or second load level.

The processing systems and/or processing systems 20 may use the at least one response parameter that is determined as a function of time (e.g., as a timeseries) to determine how disturbances will affect the grid frequency during the time interval. The specific way in which the at least on response parameter is related to the change in grid frequency depends on the response parameter. For illustration, for inertia, the change in grid frequency caused by a disturbance may be governed by equations (1)-(3) or (4), (5). For a response parameter that is or comprises the RoCoF, the change in grid frequency is determined by the RoCoF in combination with the magnitude of the disturbance.

*Probabilistic forecasting*

The processing system 20 and processing method may be operative to quantify uncertainties in the estimate of the at time-dependent least one grid response parameter over the time interval. The processing system 20 and processing method may be operative to perform probabilistic timeseries forecasting. Thereby, the processing system 20 and processing method may be operative to take into account aleatoric uncertainties (uncertainty in data) and/or epistemic uncertainties (uncertainty in model).

Example sources for such uncertainties may comprise any one or any combination of: structural uncertainty (model errors/discrepancies between physics model and real world), measurement noise, variances in data (features and target, i.e., the same grid features may yield the different results due to aleatoric and/or epistemic uncertainties), accumulating error due to auto-regressive nature, parameter uncertainty, numerical errors/approximations, algorithmic uncertainty, without being limited thereto.

The processing system 20 and processing method may be operative to use a probabilistic version of the ML models and methods disclosed herein by incorporating any one or any combination of these sources of uncertainty.

The uncertainty can be considered at various different places of the inference model: (a) uncertainty in features (input), (b) uncertainty of labels (output), and (c) uncertainty of the processing (e.g., trained ML model).

The processing system 20 and processing method may be operative to provide a quantification of uncertainty or probabilities. The probabilistic timeseries forecasting model is operative to quantify the uncertainty. In one implementation, the processing system 20 and processing method may be operative to directly output a probability distribution from which samples can be taken to obtain a timeseries or predicting both the mean and the uncertainty around it (e.g., mean and standard deviation, confidence intervals, or quantiles). To ensure coherent, non-jumpy trajectories after sampling, methods like Copula Sampling can be used.

Example methods to incorporate probabilistic timeseries forecasting or probabilistic modelling include Quantile Regression, Bayesian Methods, Gaussian Process Regression, and Neural Networks. In specific implementations, any of the techniques disclosed in T. Gneiting and M. Katzfuss. "Probabilistic forecasting." 2014. Annual Review of Statistics and Its Application, 1, pp.125-151; Y. Zhang et al. "Review on probabilistic forecasting of wind power generation." 2014. Renewable and Sustainable Energy Reviews, 32, pp.255-270; J. Nowotarski and R. Weron. "Recent advances in electricity price forecasting: A review of probabilistic forecasting." 2018. Renewable and Sustainable Energy Reviews, 81, pp.1548-1568; and D. Salinas et al. "DeepAR: Probabilistic forecasting with autoregressive recurrent networks." 2020. International Journal of Forecasting, 36(3), pp.1181-1191 may be used in the probabilistic forecasting.

In one implementation, the processing system 20 and processing method may be operative to repeat the estimation of the time-dependent estimate of the at least one response parameter for a set of operating conditions comprising generator unit commitment and load level, which reflect the uncertainty in forecasting generator unit commitment and load level. The resultant timeseries of the time-dependent estimate of the at least one response parameter (such as inertia) may be sampled to obtain a quantitative measure of the uncertainty, such as a standard deviation. The effect of uncertainties in the input data on the resultant time-dependent estimate of the at least one response parameter may be quantified thereby.

Alternatively or additionally, the processing system 20 and processing method may be operative to repeat the estimation of the time-dependent estimate of the at least one response parameter using various different processing techniques, such as regression techniques and/or ML models that have been trained using different training sets. The resultant timeseries of the time-dependent estimate of the at least one response parameter (such as inertia) may be sampled to obtain a quantitative measure of the uncertainty, such as a standard deviation. The effect of uncertainties in the processing technique on the resultant time-dependent estimate of the at least one response parameter may be quantified thereby.

The uncertainty, as quantified by the processing system 20 and/or processing method, may be used for performing the action. For illustration, the uncertainty may be output to a grid operator, in addition to the expected time-dependent response parameter(s). Alternatively or additionally, the uncertainty may be used to determine whether an automatic control and/or planning operation is warranted, such as a change in generator unit commitment.

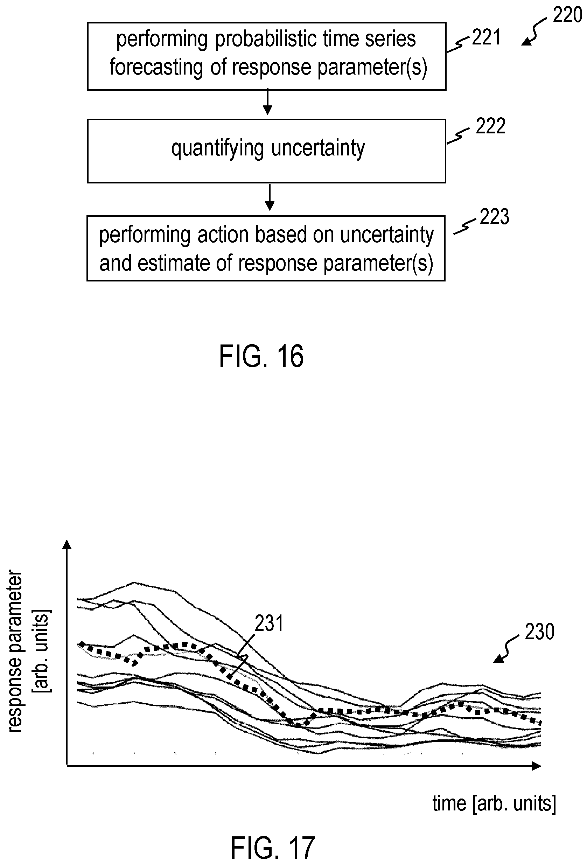

Figure 16 is a flow chart of a method 220. The method 220 may be performed automatically by the processing system 20.

At process block 221, the processing system 20 performs probabilistic timeseries forecasting of the time-dependent estimate of the at least one response parameter. This may comprise repeating the estimation of the time-dependent estimate of the at least one response parameter using different operating conditions over the time interval and/or different processing (e.g., different regression techniques and/or different ML models).

At process block 222, the processing system 20 quantifies the uncertainty. This may comprise sampling the various time-dependent response parameter curve(s) obtained at process block 221 and deriving a quantitative measure of uncertainty, such as standard deviation or 90% confidentiality range, therefrom.

At process block 223, the processing system 20 may perform an action based on both the time-dependent estimate of the at least one response parameter and its uncertainty. The action may comprise controlling a HMI for outputting both the time-dependent estimate of the at least one response parameter and its uncertainty. The action may comprise determining, based on the uncertainty and the at least one response parameter, whether an automatic control and/or planning operation (such as changing generator unit commitment) is to be performed, and, in the affirmative, performing the control and/or planning operation based on the time-dependent estimate of the at least one response parameter and, optionally, the uncertainty.

Figure 17 illustrates the operation of the processing system 20 for performing probabilistic forecasting. A set 230 of time-dependent response parameter curves is determined, which take into account uncertainties in the operating condition(s) and/or processing technique (caused by, e.g., uncertainties in the training data). A mean or most likely time evolution 231 may be used in combination with the uncertainty (such as standard deviation or 90% confidentiality range) to determine whether an action is performed and select the action to be taken.

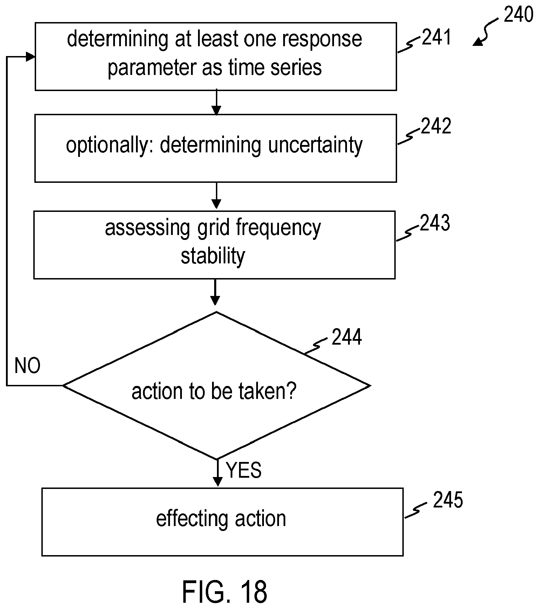

Figure 18 is a flow chart of a method 240. The method 240 may be performed automatically by the processing system 20 alone or in combination with a control system (such as a transmission system operator (TSO) and/or distribution system operator (DSO) control center) communicatively coupled to the processing system 20.

At process block 241, the processing system 20 determines the time-dependent estimate of the at least one response parameter as a timeseries.

At process bock 242, which is optional, the processing system 20 may determine an uncertainty of the time-dependent estimate of the at least one response parameter. Probabilistic forecasting may be used to this end.

At process bock 243, grid frequency stability may be assessed based on the determined at least one response parameter. For illustration, the processing system 20 may determine whether the RoCoF has a magnitude which is less than an acceptable threshold for all times during the time interval.

At process block 244, the processing system 20 determines whether an action is to be taken. The determination may be based on the time-dependent estimate of the at least one response parameter and, optionally, based on the determined uncertainty.

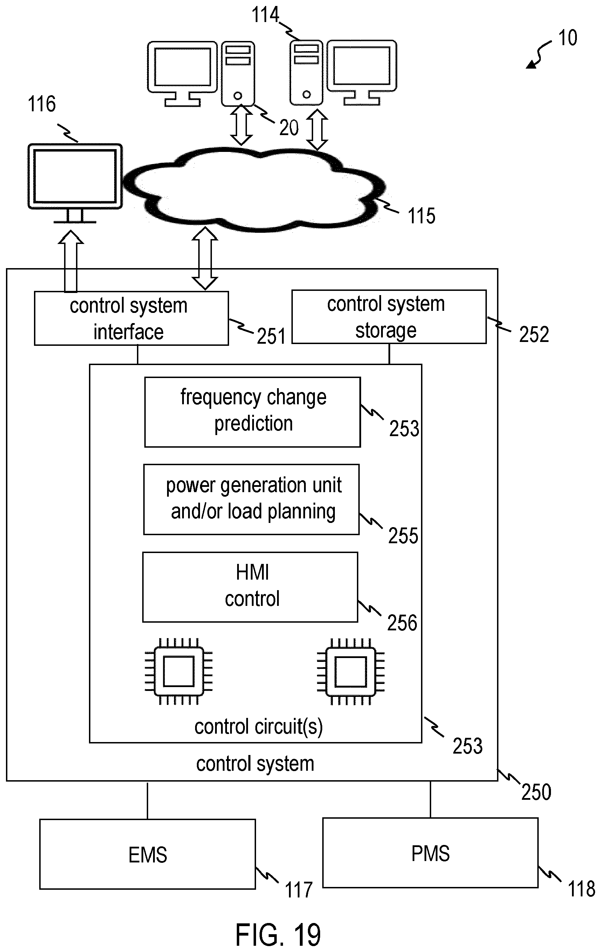

Figure 19 is a block diagram of a system 10 according to an embodiment. The system 10 comprises the processing system 20 which may be operative according to any one of the embodiments disclosed herein.

The system 10 comprises at least one server 114 operative to provide forecast information which has the potential of affecting grid frequency. The forecast information may comprise whether forecast information, in particular if the power grid has a renewables penetration. The forecast information may comprise load forecast information which may be based on historical data.

The processing system 20 and/or a control system 250 of the system 10 may be communicatively coupled with the at least one server 114 over a dedicated network or a wide area network 115 or the internet. The processing system 20 may be operative to retrieve the forecast information from the at least one server 114 and to use the forecast to determine the time-dependent estimate of the at least one response parameter (such as inertia).

The system 10 may comprise a human machine interface (HMI) 116 which may be communicatively coupled with the processing system 20 and/or the control system 250. The processing system 20 and/or the control system 250 may be operative to cause an alarm, warning, or other information to be output via the HMI 116. For illustration, the processing system 20 may cause the time-dependent estimate of the at least one response parameter, and optionally associated uncertainty information, to be output via the HMI 116 for further use. Alternatively or additionally, the processing system 20 and/or the control system 250 may cause a frequency nadir or RoCoF determined by the processing system 20 to be output via the HMI 116.

The system 10 comprises the control system 250. The processing system 20 may be operative to provide the time-dependent estimate of the at least one response parameter or information derived therefrom (such as inertia or a RoCoF) to the control system 250.

The control system 250 may be operative to receive the at least one response parameter or information derived therefrom from the processing system 20 at a control system interface 251. The control system 250 may be operative to store the at least one response parameter or information derived therefrom in a control system storage 252.

The control system 250 may comprise one or several control circuits 253. The at least one control circuit 253 may comprise any one or any combination of integrated circuits, integrated semiconductor circuits, processors, controllers, application specific integrated circuits (ASICs), field programmable gate arrays (FPGAs), circuit(s) including quantum bits (qubits) and/or quantum gates, without being limited thereto.

The at least one control circuit 253 may be operative to perform a frequency change prediction 254 to determine one, several, or all of the following based on the time-dependent estimate of the at least one response parameter as well as information on a disturbance that may occur or that is known to occur (such as by intermittent increased power demand of an arc furnace): a prediction of a grid frequency evolution in response to the disturbance; a prediction of the RoCoF in response to the disturbance; a prediction of the frequency nadir in response to the disturbance.

The at least one control circuit 253 may be operative to perform a power generator unit and/or load planning 255. The at least one control circuit 253 may be operative to adjust, for example, power generator unit commitment based on a result of the frequency change prediction 254. The at least one control circuit 253 may be operative to perform a control action acting, e.g., at least on the power generation units, at least one rotating energy storage system, and/or at least one disconnector or circuit breaker in the power grid. The control action may be operative to reduce the change in grid frequency and/or maintain the grid frequency within an acceptable frequency range. The control action may be selectively taken depending on the result of the frequency change prediction 254. The control action may be selected depending on the result of the frequency change prediction 254.

When the power grid has renewables penetration, the at least one control circuit 253 may be operative to determine adjusted settings for an energy management system (EMS) 117 and/or power management system (PMS) 118. The system 10 may comprise the EMS 117 and/or the PMS 118. The control system 250 may be operative to cause the adjusted settings to be used by the EMS 117 and/or the PMS 118 to mitigate the risk that the grid frequency leaves a target frequency band.

The at least one control circuit 253 may be operative to perform an HMI control 256. The at least one control circuit 253 may cause an alarm, warning, or other information that is based on the time-dependent estimate of the at least one response parameter, and optionally on its uncertainty, to be output via the HMI 116.

Various effects and advantages are attained by the processing system, method, and system according to embodiments. The processing system and processing method allow at least one response parameter useful for predictively determining future grid frequency changes to be determined as a function of time in a simple and reliable manner. The processing system and processing method thereby allow control actions to be taken that are useful for maintaining the grid frequency within an acceptable frequency range.

While embodiments have been described in detail with reference to the drawings, various modifications may be implemented in other embodiments. For illustration rather than limitation:

- While embodiments have been described that are operative to determine at least an inertia of a generator equivalent model, the processing system and processing method may be operative to determine any one or any combination of the following parameters of the grid response as a function of time over the time interval: inertia, damping, governor time constant, governor gain, load sensitivity to voltage magnitude and/or frequency.
- The processing system and processing method may be operative to estimate any parameter of grid frequency response and/or to perform the estimation in an area-specific manner, e.g., by determining the inertia and optionally additional or alternative parameters in an area specific manner. The processing system and processing method may be operative to determine parameters (such as inertia) for a plurality of equivalent generator models per power grid or per area.
- While embodiments have been described in which the at least one response parameter is determined based on a physics model and/or a trained ML model, the techniques are not limited thereto.
- While embodiments have been described in which the at least one response parameter is used to adjust generator unit commitment and/or to adjust settings of an EMS and/or PMS, the at least one response parameter may also be used for other purposes. For illustration, the at least one response parameter may be stored in an IED and used by a decision logic of the IED during field operation of the power grid. The at least one response parameter may be used to adjust adjustable loads.

Embodiments may be used in association with a power grid having renewables penetration, such as power grid comprising renewable energy systems (such as DERs), without being limited thereto.

This description and the accompanying drawings that illustrate aspects and embodiments of the present invention should not be taken as limiting-the claims defining the protected invention. In other words, while the invention has been illustrated and described in detail in the drawings and foregoing description, such illustration and description are to be considered illustrative and not restrictive. Various mechanical, compositional, structural, electrical, and operational changes may be made without departing from the spirit and scope of this description and the claims. In some instances, well-known circuits, structures and techniques have not been shown in detail in order not to obscure the invention. Thus, it will be understood that changes and modifications may be made by those of ordinary skill within the scope and spirit of the following claims. In particular, the present invention covers further embodiments with any combination of features from different embodiments described above and below.

The disclosure also covers all further features shown in the Figures individually although they may not have been described in the afore or following description. Also, single alternatives of the embodiments described in the Figures and the description and single alternatives of features thereof can be disclaimed from the subject matter of the invention or from disclosed subject matter. The disclosure comprises subject matter consisting of the features defined in the claims or the embodiments as well as subject matter comprising said features.

The term "comprising" does not exclude other elements or process blocks, and the indefinite article "a" or "an" does not exclude a plurality. A single unit or process block may fulfil the functions of several features recited in the claims. The mere fact that certain measures are recited in mutually different dependent claims does not indicate that a combination of these measures cannot be used to advantage. Components described as coupled or connected may be electrically or mechanically directly coupled, or they may be indirectly coupled via one or more intermediate components. Any reference signs in the claims should not be construed as limiting the scope.

A machine-readable instruction code may be stored/distributed on a suitable medium, such as an optical storage medium or a solid-state medium supplied together with or as part of other hardware, but may also be distributed in other forms, such as via a wide area network or other wired or wireless telecommunication systems. Furthermore, a machine-readable instruction code can also be a data structure product or a signal for embodying a specific method such as the method according to embodiments.

**Claims**

1. A method of processing data related to a power grid (11), the method being performed by a processing system (20) and comprising:

   receiving input data specifying operating conditions (57, 61, 65) for at least part of the power grid (11) over a time interval (51), the operating conditions (57, 61, 65) comprising generator unit commitment (63, 67) and load level (59) over the time interval (51), and

   determining a time-dependent estimate (55) of at least one response parameter that affects or represents a frequency response characteristics of the power grid (11), wherein the time-dependent estimate of the at least one response parameter is determined as a function of time over the time interval (51) for at least the generator unit commitment (63, 67) and load level (59) over the time interval (51),

   wherein the time-dependent estimate (55) of the at least one response parameter is determined based on a measurement or estimate (54) of the at least one response parameter for at least one further time interval (52) different from the time interval (51).

2. The method of claim 1, wherein the operating conditions (57, 61, 65) comprise the load level over the time interval (51) in a spatially resolved manner, optionally wherein the operating conditions (57, 61, 65) comprise weather data and/or timing information.

3. The method of claim 1 or claim 2, wherein the time-dependent estimate (59) of the at least one response parameter is determined by processing the operating conditions over the time interval (51) using a processing technique,

   wherein the processing technique depends on a reference set of several measurements or estimates (54) of the at least one response parameter over the at least one further time interval (52) different from the time interval (51),

   wherein each of the measurements or estimates of the reference set is associated with a respective grid condition (58, 62, 66) of a set of reference grid conditions over an associated one of the at least one further time interval (52), optionally wherein the set of reference grid conditions (58, 62, 66) comprises pairs of reference grid conditions that differ from each other in at least one of generator unit commitment and load level.

4. The method of claim 3, wherein the reference set of measurements or estimates (54) of the at least one response parameter is based on historic measurements, historic estimates, historic control system data, and/or simulations of at least part of a power grid (11),

   optionally wherein the reference set of measurements or estimates (54) of the at least one response parameter comprises historic estimates of inertia of a generator equivalent model over at least one further time interval (52).

5. The method of claim 3 or claim 4, wherein the reference set of measurements or estimates (54) of the at least one response parameter comprises estimates obtained based on a physical modeling, missing data replacement, and/or data augmentation,

   optionally wherein the physical modeling comprises modeling kinetic energy of rotating components of synchronous generators of the power grid (11), and/or

optionally wherein the reference set of measurements or estimates (54) of the at least one response parameter comprises historic estimates of inertia of a generator equivalent model obtained as a function of inertia contributions of generators that were online in the at least one further time interval (51), further optionally wherein the reference set of measurements or estimates (54) of the at least one response parameter comprises historic estimates of inertia of a generator equivalent model obtained by a summation of inertia contributions of generators that were online in the at least one further time interval (51).

6. The method of any one of the preceding claims, wherein determining the time-dependent estimate of the at least one response parameter comprises one or both of:

performing a timeseries analysis for the generator unit commitment (63, 67) and load level (59) over the time interval (51) to determine the time-dependent estimate of the at least one response parameter over the time interval (51);
using a trained machine learning, ML, model (132; 193) having an input layer that receives the generator unit commitment (63, 67) and load level (59) over the time interval (51), wherein the ML model (132; 193) has an output layer that provides the time-dependent estimate of the at least one response parameter,
optionally wherein the trained ML model (132; 193) comprises a long short term memory, LSTM, cell, a recurrent neural network, RNN, and/or a gated recurrent unit, GRU.

7. The method of any one of the preceding claims, further comprising

determining confidence or uncertainty information of the time-dependent estimate of the at least one response parameter as a function of time over the time interval (51), and
causing an action to be performed based on at least the determined confidence or uncertainty information,
optionally wherein the action comprises an output action via a human machine interface, HMI (116), and/or an action that counteracts variations in grid frequency, further optionally wherein the action comprises changing generator unit commitment.

8. The method of any one of the preceding claims,

wherein determining the time-dependent estimate (55) of the at least one response parameter is based on domain knowledge of the power grid (11), optionally wherein the domain knowledge comprises a model for at least part of the power grid (11), and/or
wherein the method further comprises repeating the step of determining the time-dependent estimate (55) of the at least one response parameter for two or more areas of the power grid (11) to determine the time-dependent estimate in an area-specific manner for each of the two or more areas.

9. The method of any one of the preceding claims,

wherein the at least one response parameter comprises a parameter of a generator equivalent model,
optionally wherein the at least one response parameter comprises a parameter of a single generator equivalent model of generators of the power grid (11) or of part of the power grid (11); and/or
wherein the at least one response parameter comprises one, several, or all of: inertia, damping, governor time constant, governor gain, load sensitivity to voltage magnitude and/or frequency.

10. The method of any one of the preceding claims, wherein the at least one response parameter comprises an inertia of a generator equivalent of one or several power generators of the power grid.

11. The method of any one of the preceding claims, further comprising

storing the determined time-dependent estimate of the at least one response parameter in a storage (252) accessible by a control, protection, and/or monitoring system (250) for use in forecasting changes in grid frequency, and/or
using, by the processing system (20), the determined time-dependent estimate of the at least one response parameter to forecast or back cast changes in grid frequency;
wherein the forecast or back cast changes in grid frequency are determined based on the time-dependent estimate of the at least one response parameter and expected generator unit commitment and load level over a forecast or back cast time interval,

optionally wherein the forecast or back cast changes in grid frequency comprises a rate of change of frequency, RoCoF, and/or a frequency nadir over the forecast or back cast time interval.

12. The method of any one of the preceding claims, further comprising effecting, by the processing system (20), an action based on at least the determined time-dependent estimate of the at least one response parameter,

   optionally wherein the action comprises an output action via a human machine interface, HMI (116), and/or an action that counteracts variations in grid frequency, and/or
   optionally wherein the action comprises adjusting generator unit commitments and/or load levels.

13. A power grid operation, protection, and/or monitoring method, comprising:

   using, by a control, protection, and/or monitoring system (250), the time-dependent estimate (55) of the at least one response parameter to forecast changes in grid frequency, the time-dependent estimate of the at least one response parameter being determined by the method of any one of the preceding claims, and
   performing an action based on the determined time-dependent estimate of the at least one response parameter.

14. A processing system (20) for processing data related to a power grid (11), the processing system (20) comprising:

   an interface (21) operative to receive input data specifying operating conditions (57, 61, 65) for at least part of the power grid (11) over a time interval (51), the operating conditions (57, 61, 65) comprising generator unit commitment (63, 67) and load level (59) over the time interval (51), and
   at least one processing circuit (30) operative to determine a time-dependent estimate (55) of at least one response parameter that affects or represents a frequency response characteristics of the power grid (11), wherein the time-dependent estimate (55) of the at least one response parameter is determined as a function of time over the time interval (51) for at least the generator unit commitment (63, 67) and load level (59) over the time interval (51), wherein the at least one processing circuit (30) is operative to determine the time-dependent estimate (55) of the at least one response parameter based on a measurement or estimate of the at least one response parameter for a further time interval (52) different from the time interval (51).

15. A system, comprising:

   a power grid (11),
   the processing system (20) of claim 14 operative to determine the time-dependent estimate of the at least one response parameter over the time interval (51), and
   a control, protection, and/or monitoring system (250) operative to perform an action based on the determined time-dependent estimate of the at least one response parameter, optionally wherein the action counteracts a change of grid frequency forecast based on the time-dependent estimate of the at least one response parameter.

23

**processing parameter(s) or instructions** 25

**measurements and/or estimates** 24

storage system

21

interface

**input data processing** 31

**response parameter determination** 32

**action based on response parameter** 33

processing circuit(s)

30

22

output interface

processing system

20

## FIG. 1

FIG. 2

FIG. 3

receiving operating conditions over time interval ⟋71

processing operating conditions based on measurement or estimate of the at least one response parameter for a further time interval ⟋72

using determined time-dependent response parameter to perform action ⟋73

FIG. 4

FIG. 5

FIG. 6

131

past unit commitments
and inertia estimates

132

training ML
model

133

trained
model

130

## FIG. 7

142

forecast unit
commitment

140

141

inertia
estimation

143

inertia
forecasting

144

inertia
forecast

## FIG. 8

Input data

Output data

Generator status  Inertia data  Load profile  Optional data

Inertia profile  151

Generator status  Load profile  Optional data

Inertia profile  152

Generator status  Inertia data  Load profile  Optional data

Inertia profile  153

Generator status  Inertia data  Load profile  Optional data

Inertia profile  154

Generator status  Inertia data  Load profile  Optional data

Inertia profile  155

Historical data (past)  Current data (present)  Forecasted data (future)

FIG. 9

EP 4 429 070 A1

retrieving training set — 161 — 160

↓

feature engineering and/or selection — 162

↓

determining processing parameters for online inference — 163

↓

providing the processing parameter for online inference — 164

FIG. 10

receiving input data — 171 — 170

↓

processing input data based on physics model — 172

↓

using determined time-dependent response parameter to perform action — 173

FIG. 11

181 — receiving input data

180

182 — processing input data based on physics model

183 — processing input data using ML model

184 — combining physics model and ML model results

185 — using determined time-dependent response parameter to perform action

FIG. 12

190

Input data

191 — physics model

192 — solution

193 — ML model

+

Output data

FIG. 13

```
                          ┌──────────────────────────────┐ ⌇201      ↙ 200
                          │  recording sporadic disturbance │
                          └──────────────────────────────┘
                                        │
                                        ▼
                          ┌──────────────────────────────┐ ⌇202
                          │ recording frequency measurements and │
                          │      disturbance information     │
                          └──────────────────────────────┘
                                        │
                                        ▼
                          ┌──────────────────────────────┐ ⌇203
                          │       estimating inertia        │
                          └──────────────────────────────┘
                                        │
                                        ▼
                          ┌──────────────────────────────┐ ⌇204
                          │       updating database         │
                          └──────────────────────────────┘
                                        │
                                        ▼
                          ┌──────────────────────────────┐ ⌇205
                          │  providing database for use during │
                          │            inference            │
                          └──────────────────────────────┘
```

FIG. 14

FIG.15

performing probabilistic time series
forecasting of response parameter(s) ⟋221    ⟋220

quantifying uncertainty ⟋222

performing action based on uncertainty
and estimate of response parameter(s) ⟋223

## FIG. 16

231    ⟋230

response parameter
[arb. units]

time [arb. units]

## FIG. 17

240

determining at least one response parameter as time series — 241

↓

optionally: determining uncertainty — 242

↓

assessing grid frequency stability — 243

↓

NO ◇ action to be taken? — 244

↓ YES

effecting action — 245

FIG. 18

FIG. 19

Europäisches
Patentamt

European
Patent Office

Office européen
des brevets

# EUROPEAN SEARCH REPORT

**Application Number**

EP 23 16 0077

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TROVATO VINCENZO ET AL: "Unit Commitment With Inertia-Dependent and Multispeed Allocation of Frequency Response Services", IEEE TRANSACTIONS ON POWER SYSTEMS, IEEE, USA, vol. 34, no. 2, 1 March 2019 (2019-03-01), pages 1537-1548, XP011710491, ISSN: 0885-8950, DOI: 10.1109/TPWRS.2018.2870493 [retrieved on 2019-02-16] * the whole document * | 1,2,6, 8-15 | INV. H02J13/00 H02J3/24 G06Q50/06 G01R23/00 |
| X | MOHAMMAD RAJABDORRI ET AL: "Robust Frequency Constrained UC Using Data Driven Logistic Regression for Island Power Systems", ARXIV.ORG, CORNELL UNIVERSITY LIBRARY, 201 OLIN LIBRARY CORNELL UNIVERSITY ITHACA, NY 14853, 29 March 2022 (2022-03-29), XP091174514, * the whole document * | 1,4-6, 13-15 | |

**TECHNICAL FIELDS SEARCHED (IPC)**

H02J

The present search report has been drawn up for all claims

| Place of search | Date of completion of the search | Examiner |
|---|---|---|
| Munich | 18 August 2023 | Hartmann, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 429 070 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 10218181 B2
- US 10997674 B2
- US 11112438 B2

### Non-patent literature cited in the description

- **M. RAISSI et al.** Physics-informed neural networks: A deep learning framework for solving forward and inverse problems involving nonlinear partial differential equations. *Journal of Computational physics,* 2019, vol. 378, 686-707
- **Z. LI et al.** Fourier neural operator for parametric partial differential equations. *arXiv preprint arXiv:2010.08895*
- **D. CAO et al.** Spectral temporal graph neural network for multivariate timeseries forecasting. *Advances in Neural Information Processing Systems,* 2020, vol. 33, 17766-17778
- **Y. WANG et al.** Generalizing from a few examples: A survey on few-shot learning. *ACM computing surveys (csur),* 2020, vol. 53 (3), 1-34
- **K. WEISS et al.** A survey of transfer learning. *Journal of Big data,* 2020, vol. 3 (1), 1-40
- **T. GNEITING ; M. KATZFUSS.** Probabilistic forecasting. *Annual Review of Statistics and Its Application,* 2014, vol. 1, 125-151
- **Y. ZHANG et al.** Review on probabilistic forecasting of wind power generation. *Renewable and Sustainable Energy Reviews,* 2014, vol. 32, 255-270
- **J. NOWOTARSKI ; R. WERON.** Recent advances in electricity price forecasting: A review of probabilistic forecasting. *Renewable and Sustainable Energy Reviews,* 2018, vol. 81, 1548-1568
- **D. SALINAS et al.** DeepAR: Probabilistic forecasting with autoregressive recurrent networks. *International Journal of Forecasting,* 2020, vol. 36 (3), 1181-1191